# EUROPEAN PATENT APPLICATION

(11) **EP 2 842 959 A1**
(43) Date of publication of application: **04.03.2015**
(21) Application number: 14182012.6
(22) Date of filing: 22.08.2014
(51) Int. Cl.: C07F 9/50, C07F 9/53, C07F 15/00

(54) **Phosphorous compound and transition metal complex thereof**

(30) Priority: 30.08.2013 JP 2013179931; 18.07.2014 JP 2014148122
(71) Applicant: Takasago International Corporation, Tokyo-to 144-8721 (JP)
(72) Inventor: Yokoyama, Naota, Hiratsuka-shi, Kanagawa 2540073 (JP); Nakayama, Yuji, Hiratsuka-shi, Kanagawa 2540073 (JP)
(74) Representative: Zimmermann & Partner

(57) **Abstract**

The present invention provides a phosphorous compound represented by general formula (1), and transition metal complexes containing such phosphorous compounds as ligands: 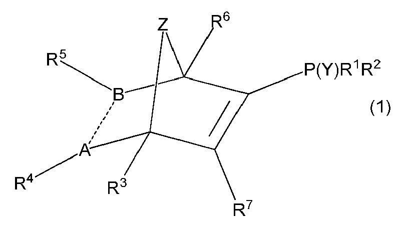 wherein R¹ to R⁷, A, B, Y, and Z have the same meanings as those defined in the specification.

## Description

### [Technical Field]

The present invention relates to a novel phosphorous compound and a transition metal complex containing the phosphorous compound as a ligand.

### [Background Art]

Today, various transition metal complexes composed of transition metal species and ligands are used as catalysts of organic synthesis reactions. It is well known that not only transition metal species but also ligands of complexes play important roles as factors of exhibiting the performance or activity of such catalysts. For this reason, heretofore, numerous coordination compounds including phosphorous compounds have been developed as ligands. Furthermore, when an organic synthesis reaction is carried out using a complex catalyst, it is possible to construct optimum catalysts for a variety of substrates by appropriately combining transition metal species and ligands. Hence, the research and development are still actively conducted at present. It is needless to say that the type of transition metal species available is limited. Accordingly, when a catalytic organic synthesis reaction is carried out in an industrial scale, the diversity of ligands greatly contributes to the optimization and efficiency of the reaction. However, even when already-developed ligands are actually used, the activity of the catalysts and reaction selectivity depend on reactions, and are not always sufficient. Hence, a development of a novel phosphorous compound usable as an efficient ligand is strongly desired even now.

### [Summary of Invention]

The present invention has been made in view of the above-described demand. An object of the present invention is to provide: a phosphorous compound usable as a useful ligand in an organic synthesis reaction using a complex catalyst; and a transition metal complex useful as a catalyst in an organic synthesis reaction.

In order to achieve the above-described object, the present inventors have conducted earnest studies. As a result, the inventors have found out that a novel phosphorous compound represented by general formula (1) is an excellent ligand. Further, the inventors have found out that a transition metal complex containing the phosphorous compound as a ligand is an excellent catalyst in an organic synthesis reaction, for example, a catalyst quite useful in a bond forming reaction and the like. These discoveries have led to the completion of the present invention.

Specifically, the present invention includes the following contents [1] to [6].
[1] A phosphorous compound represented by general formula (1): 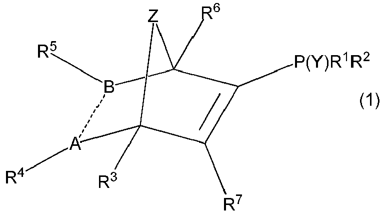 wherein R¹ and R² each independently represent a hydrogen atom, an alkyl group, an alkenyl group optionally having substitutent(s), an aryl group optionally having substitutent(s), a heteroaryl group optionally having substitutent(s), or an aralkyl group optionally having substitutent(s), or R¹ and R² may be bonded to each other to form a ring containing a phosphorus atom to which R¹ and R² are bonded; an A-B bond represents a carbon-carbon single bond or a carbon-carbon double bond; in the case where the A-B bond is a carbon-carbon single bond, both A and B represent a methanetriyl group; in the case where the A-B bond is a carbon-carbon double bond, both A and B represent a carbon atom; R⁷ represents a hydrogen atom, an aryl group optionally having substitutent(s), or a heteroaryl group optionally having substitutent(s); Z represents an divalent group optionally having substitutent(s); R³, R⁴, R⁵, and R⁶ each independently represent a hydrogen atom, an alkyl group optionally having substitutent(s), an alkenyl group optionally having substitutent(s), an aryl group optionally having substitutent(s), or an aralkyl group optionally having substitutent(s); and Y represents an oxo group, a thioxo group, a monomeric borane, or a lone electron pair.
[2] The phosphorous compound according to [1], wherein Z is selected from the group consisting of an oxy group, a thio group, imino groups optionally having substitutent(s), methylene groups optionally having substitutent(s), and ethylene groups optionally having substitutent(s).
[3] The phosphorous compound according to [1] or [2] which is an optically active substance.
[4] The phosphorous compound according to any one of [1] to [3], wherein Y is a lone electron pair.
[5] A transition metal complex comprising the phosphorous compound according to any one of [1] to [4] as a ligand.
[6] The transition metal complex according to [5], comprising a transition metal selected from the group consisting of iron, cobalt, nickel, copper, ruthenium, rhodium, palladium, silver, osmium, iridium, platinum, and gold.

The phosphorous compound represented by the general formula (1) (hereinafter referred to as the phosphorous compound of the present invention) is useful not only as a ligand in an organic synthesis reaction using a complex catalyst, but also as a synthetic intermediate thereof. Moreover, the transition metal complex containing the phosphorous compound of the present invention as a ligand (hereinafter referred to as the complex of the present invention) is useful as a catalyst in an organic synthesis reaction. For example, a complex containing a transition metal palladium and the phosphorous compound of the present invention is quite useful as a catalyst in a bond forming reaction, and aromatic compounds and the like can be produced efficiently by such reactions.

### [Description of Embodiments]

Hereinafter, a phosphorous compound of the present invention will be described in more details. In the phosphorous compound of the present invention, R¹ and R² each independently represent a hydrogen atom, an alkyl group, an alkenyl group optionally having substitutent(s), an aryl group optionally having substitutent(s), a heteroaryl group optionally having substitutent(s), or an aralkyl group optionally having substitutent(s), and preferably represent an alkyl group or an aryl group optionally having substitutent (s). Examples of the alkyl group include linear, branched, or cyclic alkyl group having 1 to 30 carbon atoms, preferably alkyl group having 1 to 20 carbon atoms, and more preferably alkyl group having 1 to 10 carbon atoms. Specifically, the examples include a methyl group, an ethyl group, a n-propyl group, a 2-propyl group, a cyclopropyl group, a n-butyl group, a 2-butyl group, an isobutyl group, a tert-butyl group, a cyclobutyl group, a n-pentyl group, a 2-pentyl group, a 3-pentyl group, a tert-pentyl group, a 2-methylbutyl group, a 3-methylbutyl group, a 2-methylbutan-3-yl group, a 2,2-dimethylpropyl group, a cyclopentyl group, a n-hexyl group, a 2-hexyl group, a 3-hexyl group, a tert-hexyl group, a 2-methylpentyl group, a 3-methylpentyl group, a 4-methylpentyl group, a 2-methylpentan-3-yl group, a 2-methylpentan-4-yl group, a 3-methylpentan-2-yl group, a 3-methylpentan-3-yl group, a 2,2-dimethylbutyl group, a 3,3-dimethylbutyl group, a 2,2-dimethylbutan-3-yl group, a cyclohexyl group, a 1-adamantyl group, a 2-adamantyl group, and the like, and preferably a tert-butyl group, a cyclohexyl group, and the like. Examples of the alkenyl group include linear, branched, or cyclic alkenyl group having 2 to 20 carbon atoms, and preferably alkenyl group having 2 to 14 carbon atoms. Specifically, the examples include a vinyl group, a 1-propenyl group, a 2-propenyl group, an allyl group, a 1-cyclohexenyl group, a 1-styryl group, a 2-styryl group, a 2,2-diphenylvinyl group, and the like. Examples of the aryl group include an aryl group having 6 to 18 carbon atoms, and preferably an aryl group having 6 to 14 carbon atoms. Specifically, the examples include a phenyl group, a 1-naphthyl group, a 2-naphthyl group, a 2-biphenyl group, a 4-biphenyl group, a 9-anthryl group, a 9-phenanthrenyl group, and the like, and preferably a phenyl group. Examples of the heteroaryl group include a heteroaryl group having 1 to 12 carbon atoms, preferably having 4 to 8 carbon atoms. Specifically, the examples include a 2-furyl group, a 3-furyl group, a 2-thienyl group, a 3-thienyl group, a 2-benzofuryl group, a 3-benzofuryl group, a 2-benzothienyl group, a 3-benzothienyl group, and the like. Examples of the aralkyl group include linear, branched, or cyclic aralkyl group having 7 to 24 carbon atoms, and preferably aralkyl group having 7 to 16 carbon atoms. Specifically, the examples include a benzyl group, a 1-phenylethyl group, a 2-phenylethyl group, a 1-phenylpropyl group, a 2-phenylpropyl group, a 3-phenylpropyl group, a 1-phenyl-2-propyl group, 2-phenyl-2-propyl group, a 1,1-dimethyl-2-phenylethyl group, a 1-phenylcyclopropyl group, a 2-phenylcyclopropyl group, a 2,2-diphenylcyclopropyl group, a 1-methyl-2,2-diphenylcyclopropyl group, a 1-indanyl group, a 2-indanyl group, a 9-fluorenyl group, and the like.

In one embodiment, an A-B bond represents a carbon-carbon single bond. In this case, both A and B represent a methanetriyl group. Meanwhile, in another embodiment, the A-B bond represents a carbon-carbon double bond. In this case, both A and B represent a carbon atom.

In the phosphorous compound of the present invention, R⁷ represents a hydrogen atom, an aryl group optionally having substitutent(s), or a heteroaryl group optionally having substitutent(s), and preferably represents a hydrogen atom or an aryl group optionally having substitutent (s) . Examples of the aryl group include an aryl group having 6 to 18 carbon atoms, and preferably an aryl group having 6 to 14 carbon atoms. Specifically, the examples include a phenyl group, a 1-naphthyl group, a 2-naphthyl group, a 2-biphenyl group, a 4-biphenyl group, a 9-anthryl group, a 9-phenanthrenyl group, and the like, and preferably a phenyl group. Examples of the heteroaryl group include a heteroaryl group having 2 to 15 carbon atoms, preferably having 4 to 12 carbon atoms. Specific examples of the heteroaryl group include a furyl group, a thienyl group, a pyrryl group, a pyrazolyl group, an imidazolyl group, an oxazolyl group, a thiazolyl group, a pyridyl group, a pyridazyl group, a pyrimidyl group, a pyrazyl group, a benzofuryl group, a benzothienyl group, an indolyl group, a carbazolyl group, an indazolyl group, a benzoimidazolyl group, a benzoxazolyl group, a benzothiazolyl group, a quinolyl group, an isoquinolyl group, naphthyridinyl groups, and the like. Specific examples of more preferable heteroaryl groups include a 2-furyl group, a 2-thienyl group, a 1-pyrryl group, a 2-pyridyl group, a 2-benzofuryl group, a 2-benzothienyl group, a 1-indolyl group, a 9-carbazolyl group, a 2-quinolyl group, a 1-isoquinolyl group, a 3-isoquinolyl group, and the like.

Each of the alkenyl group, the aryl group, the heteroaryl group, and the aralkyl group as R¹, R², and R⁷ in the phosphorous compound of the present invention may have substitutent(s). Preferable substituents thereof include an alkyl group, a halogenoalkyl group, an alkoxy group, an amino group, a halogeno group, and the like, and more preferably an alkoxy group. Examples of the alkyl group include an alkyl group having 1 to 10 carbon atoms, and preferably an alkyl group having 1 to 4 carbon atoms. Specifically, the examples include a methyl group, an ethyl group, a n-propyl group, a 2-propyl group, a n-butyl group, a 2-butyl group, an isobutyl group, a tert-butyl group, and the like. The halogenoalkyl group includes a halogenoalkyl group obtained by substituting a halogen atom for a hydrogen atom of at least one of the alkyl groups. Specifically, the halogenoalkyl group includes a trifluoromethyl group, a nonafluorobutyl group, and the like. Examples of the alkoxy group include an alkoxy group having 1 to 10 carbon atoms, and preferably an alkoxy group having 1 to 4 carbon atoms. Specifically, the examples include a methoxy group, an ethoxy group, a 1-propoxy group, a 2-propoxy group, a 1-butoxy group, a 2-butoxy group, a tert-butoxy group, and the like, and preferably a methoxy group. The amino group specifically includes an N,N-dimethylamino group, an N-methyl-N-phenylamino group, an N,N-diphenylamino group, and the like. The halogeno group specifically includes a fluoro group, a chloro group, a bromo group, and an iodo group, and preferably a fluoro group. Further, R¹ and R² may be bonded to each other to form a ring containing a phosphorus atom to which R¹ and R² are bonded. Examples of the ring containing a phosphorus atom include a phospholane ring, a phosphole ring, a phosphinane ring, and the like.

In the phosphorous compound of the present invention, Z represents a divalent group optionally having substitutent (s) . Preferable divalent groups include an oxy group (-O-), a thio group (-S-), an imino group (-NH-) optionally having substitutent(s), a methylene group (-CH₂-) optionally having substitutent(s), and an ethylene group (-CH₂CH₂-) optionally having substitutent(s), and more preferably a methylene group. Substituents which may be possessed by the imino group include an alkyl group, an aryl group, an aralkyl group, an acyl group, an alkoxycarbonyl group, an aryloxycarbonyl group, an aralkyloxycarbonyl group, an alkylsulfonyl group, an arylsulfonyl group, and the like, and preferably an alkyl group, an aryl group, an aralkyl group, and the like. Examples of the imino group optionally having substitutent (s) include an unsubstituted imino group, an N-alkylimino group, an N-arylimino group, an N-aralkylimino group, an N-acylimino group, an N-alkoxycarbonylimino group, an N-aryloxycarbonylimino group, an N-aralkyloxycarbonylimino group, an N-alkylsulfonylimino group, an N-arylsulfonylimino group, and the like, and preferably an N-alkylimino group, an N-arylimino group, an N-aralkylimino group, and the like. The N-alkylimino group specifically includes an N-methylimino group, an N-ethylimino group, an N-isopropylimino group, an N-cyclohexylimino group, and the like. The N-arylimino group specifically includes an N-phenylimino group, an N-(2,4,6-trimethylphenyl)imino group, an N-(3,5-di-tert-butylphenyl)imino group, an N-(1-naphthyl)imino group, an N-(2-naphthyl)imino group, an N-(9-anthryl)imino group, and the like. The N-aralkylimino group specifically includes an N-benzylimino group, an N-(1-phenylethyl)imino group, and the like. Substituents which may be possessed by the methylene group and the ethylene group include an alkyl group, a halogenoalkyl group, an alkenyl group, an aryl group, an aralkyl group, an alkoxy group, an acyloxy group, an alkylthio group, an acylthio group, a cyano group, a halogeno group, and the like. Examples of the alkyl group include an alkyl group having 1 to 10 carbon atoms, and preferably an alkyl group having 1 to 4 carbon atoms. Specifically, the examples include a methyl group, an ethyl group, a n-propyl group, a n-butyl group, and the like. The halogenoalkyl group includes a halogenoalkyl group obtained by substituting a halogen atom for a hydrogen atom of at least one of the alkyl groups. Specifically, the halogenoalkyl group includes a trifluoromethyl group. Examples of the alkenyl group include an alkenyl group having 2 to 10 carbon atoms, and preferably an alkenyl group having 2 to 4 carbon atoms. Specifically, the examples include a vinyl group, an allyl group, and the like. Examples of the aryl group include an aryl group having 6 to 14 carbon atoms, and preferably an aryl group having 6 to 10 carbon atoms. Specifically, the examples include a phenyl group, a 1-naphthyl group, and a 2-naphthyl group. Examples of the aralkyl group include an aralkyl group having 7 to 16 carbon atoms, and preferably an aralkyl group having 7 to 11 carbon atoms. Specifically, the examples include a benzyl group, a 2-naphthylmethyl group, and the like. Examples of the alkoxy group include an alkoxy group having 1 to 10 carbon atoms, and preferably an alkoxy group having 1 to 4 carbon atoms. Specifically, the examples include a methoxy group, an ethoxy group, a 1-propoxy group, a 1-butoxy group, and the like. The acyloxy group specifically includes an acetoxy group, and the like. Examples of the alkylthio group include an alkylthio group having 1 to 10 carbon atoms, and preferably an alkylthio group having 1 to 4 carbon atoms. Specifically, the examples include a methylthio group, an ethylthio group, a n-propylthio group, a n-butylthio group, and the like. The acylthio group specifically includes an acetylthio group, and the like. The halogeno group specifically includes a fluoro group, a chloro group, a bromo group, and an iodo group, and preferably a fluoro group. In a case where the methylene group and the ethylene group serving as Z had multiple substituents, the substituents may be bonded to each other to form a ring.

In the phosphorous compound of the present invention, R³, R⁴, R⁵, and R⁶ each independently represent a hydrogen atom, an alkyl group optionally having substitutent(s), an alkenyl group optionally having substitutent(s), an aryl group optionally having substitutent(s), or an aralkyl group optionally having substitutent(s), and preferably represent a hydrogen atom. Examples of the alkyl group include linear, branched, or cyclic alkyl group having 1 to 30 carbon atoms, preferably alkyl group having 1 to 20 carbon atoms, and more preferably alkyl group having 1 to 6 carbon atoms. Specifically, the examples include a methyl group, an ethyl group, a n-propyl group, a 2-propyl group, a cyclopropyl group, a n-butyl group, a 2-butyl group, an isobutyl group, a tert-butyl group, a cyclobutyl group, a n-pentyl group, a 2-pentyl group, a 3-pentyl group, a tert-pentyl group, a 2-methylbutyl group, a 3-methylbutyl group, a 2-methylbutan-3-yl group, a 2, 2-dimethylpropyl group, a cyclopentyl group, a n-hexyl group, a 2-hexyl group, a 3-hexyl group, a tert-hexyl group, a 2-methylpentyl group, a 3-methylpentyl group, a 4-methylpentyl group, a 2-methylpentan-3-yl group, a 2-methylpentan-4-yl group, a 3-methylpentan-2-yl group, a 3-methylpentan-3-yl group, a 2,2-dimethylbutyl group, a 3,3-dimethylbutyl group, a 2,2-dimethylbutan-3-yl group, a cyclohexyl group, and the like. Examples of the alkenyl group include linear or branched alkenyl group having 2 to 14 carbon atoms, and preferably alkenyl group having 2 to 8 carbon atoms. Specifically, the examples include a vinyl group, a 1-propenyl group, a 2-propenyl group, an allyl group, a 1-styryl group, a 2-styryl group, and the like. Examples of the aryl group include an aryl group having 6 to 18 carbon atoms, and preferably an aryl group having 6 to 12 carbon atoms. Specifically, the examples include a phenyl group, a 1-naphthyl group, a 2-naphthyl group, a 2-biphenyl group, a 4-biphenyl group, and the like. Examples of the aralkyl group include linear or branched aralkyl group having 7 to 24 carbon atoms, and preferably aralkyl group having 7 to 13 carbon atoms. Specifically, the examples include a benzyl group, a 1-phenylethyl group, a 2-phenylethyl group, a 2-naphthylmethyl group, and the like.

Each of the alkyl group, the alkenyl group, the aryl group, and the aralkyl group as R³, R⁴, R⁵, and R⁶ in the phosphorous compound of the present invention may have substitutent(s). Examples of the substituent include an alkyl group, an alkenyl group, an alkynyl group, an aryl group, an aralkyl group, an aliphatic heterocyclic group, a heteroaryl group, a hydroxyl group, an alkoxy group, an aryloxy group, an aralkyloxy group, heteroaryloxy group, an acyloxy group, an acyl group, a carboxyl group, an alkoxycarbonyl group, an aryloxycarbonyl group, an aralkyloxycarbonyl group, a heteroaryloxycarbonyl group, a mercapto group, an alkylthio group, an arylthio group, an aralkylthio group, a heteroarylthio group, an acylthio group, a sulfinyl group, a sulfonyl group, a sulfo group, an amino group, a cyano group, a halogeno group, and the like, and preferably an alkyl group, alkenyl group, an alkynyl group, an aryl group, aralkyl group, a hydroxyl group, an alkoxy group, an amino group, a cyano group, a halogeno group, and the like. The preferable substituents will be further specifically described. Examples of the alkyl group include an alkyl group having 1 to 10 carbon atoms, and preferably an alkyl group having 1 to 4 carbon atoms. Specifically, the examples include a methyl group, an ethyl group, a n-propyl group, a 2-propyl group, a n-butyl group, a 2-butyl group, an isobutyl group, a tert-butyl group, and the like. Examples of the alkenyl group include an alkenyl group having 2 to 10 carbon atoms, and preferably an alkenyl group having 2 to 3 carbon atoms. Specifically, the examples include a vinyl group, a 1-propenyl group, a 2-propenyl group, an allyl group, and the like. Examples of the alkynyl group include an alkynyl group having 2 to 10 carbon atoms, and preferably an alkynyl group having 2 to 4 carbon atoms. Specifically, the examples include an ethynyl group, a 1-propynyl group, a 1-butynyl group, and the like. Examples of the aryl group include an aryl group having 6 to 18 carbon atoms, and preferably an aryl group having 6 to 12 carbon atoms. Specifically, the examples include a phenyl group, a 1-naphthyl group, a 2-naphthyl group, a 2-biphenyl group, a 4-biphenyl group, and the like. Examples of the aralkyl group include an aralkyl group having 7 to 24 carbon atoms, and preferably an aralkyl group having 7 to 13 carbon atoms. Specifically, the examples include a benzyl group, a 1-phenylethyl group, a 2-phenylethyl group, a 2-naphthylmethyl group, and the like. Examples of the alkoxy group include an alkoxy group having 1 to 10 carbon atoms, and preferably an alkoxy group having 1 to 4 carbon atoms. Specifically, the examples include a methoxy group, an ethoxy group, a 1-propoxy group, a 2-propoxy group, a 1-butoxy group, a 2-butoxy group, a tert-butoxy group, and the like. The amino group specifically includes an unsubstituted amino group, an N,N-dimethylamino group, an N-methyl-N-phenylamino group, an N,N-diphenylamino group, and the like. The halogeno group specifically includes a fluoro group, a chloro group, a bromo group, and an iodo group.

In the phosphorous compound of the present invention, Y represents an oxo group, a thioxo group, a monomeric borane, or a lone electron pair, and preferably represents a lone electron pair.

The phosphorous compound of the present invention can be readily produced by appropriately combining techniques of known organic synthesis reactions such as, for example, deprotonation, oxidation/sulfidation/reduction reactions, protection/deprotection reactions, nucleophilic/electrophilic substitution reactions, hydrogenation/dehydrogenation reactions, halogenation, enol etherification, phosphination, Diels-Alder reaction, and various coupling reactions. Although the present invention is not limited at all to the following examples, each phosphorous compound represented by the general formula (1) can be readily synthesized, for example, in accordance with Reaction Equation 1 illustrated below using commercially-available trimethylsilylacetylene (2) as a raw material.

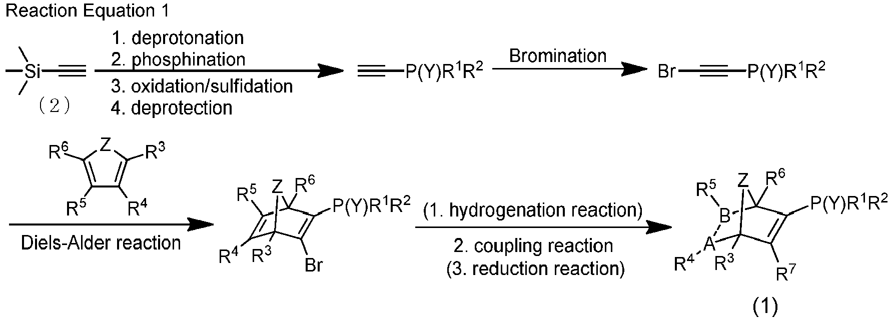

Moreover, an optically active substance of the phosphorous compound of the present invention can be produced by adopting a technique such as chiral pool synthesis, asymmetric reaction, and optical resolution alone or in combination. The phosphorous compound of the present invention produced in this manner may be post-treated, purified, and isolated, as necessary. Examples of the post-treatment method include washing of a reaction liquid, extraction of a product, filtration of a precipitate, evaporation of a solvent, crystallization by adding a solvent, and the like. These post-treatments may be performed alone or in combination. Examples of the purification and isolation methods include decoloration using an adsorbent such as active carbon and silica gel, column chromatography, distillation, re-crystallization, sublimation, and the like. These may be performed alone or in combination. When the phosphorous compound of the present invention is used as a ligand in a catalytic organic synthesis reaction, the reaction liquid may be used directly, or may be used after post-treated, purified, and isolated, as necessary.

Next, a complex of the present invention will be described in more details. The complex of the present invention is obtained by coordinating the phosphorous compound of the present invention to a transition metal compound. Examples of the transition metal compound include compounds of iron, cobalt, nickel, copper, ruthenium, rhodium, palladium, silver, osmium, iridium, platinum, gold, or the like, preferably compounds of cobalt, nickel, copper, ruthenium, rhodium, palladium, silver, iridium, gold, or the like, and further preferably palladium. Preferable transition metal compounds will be further specifically described. Examples of the iron compound include zerovalent, divalent and trivalent iron compounds. Specifically, the examples include iron(0) pentacarbonyl, diiron nonacarbonyl, iron(II) acetate, iron(II) iodide, iron(II) bromide, ammonium iron(II) sulfate hexahydrate, iron(II) chloride, iron(II) chloride tetrahydrate, iron(II) acetylacetonate, iron(II) sulfate hydrate, iron(II) sulfate heptahydrate, iron(II) perchlorate hydrate, iron(II) tetrafluoroborate hexahydrate, iron(II) fluoride, iron(III) sulfate hydrate, iron(III) nitrate nonahydrate, iron(III) chloride, iron(III) chloride hexahydrate, iron(III) bromide, iron(III) acetylacetonate, iron(III) perchlorate hydrate, iron(III) phosphate hydrate, iron(III) phosphate tetrahydrate, iron(III) fluoride, iron(III) fluoride trihydrate, iron(III) trifluoroacetylacetonate, and the like. Examples of the cobalt compound include divalent and trivalent cobalt compounds. Specifically, the examples include cobalt(II) iodide, cobalt(II) bromide, cobalt(II) bromide hydrate, cobalt(II) chloride, cobalt(II) chloride hydrate, cobalt(II) chloride hexahydrate, cobalt(II) fluoride, cobalt(II) fluoride tetrahydrate, cobalt(II) cyanide dihydrate, cobalt(II) acetate, cobalt(II) acetate tetrahydrate, cobalt(II) sulfate hydrate, cobalt(II) sulfate heptahydrate, cobalt(II) nitrate hexahydrate, cobalt(II) perchlorate hexahydrate, cobalt(II) tetrafluoroborate hexahydrate, cobalt(II) acetylacetonate, cobalt(II) acetylacetonate hydrate, cobalt(II) hexafluoroacetylacetonate hydrate, cobalt(III) acetylacetonate, cobalt (III) fluoride, and the like. Examples of the nickel compound include zerovalent and divalent nickel compounds. Specifically, the examples include bis(1,5-cyclooctadiene)nickel(0), tetrakis(triphenylphosphine)nickel(0), bis(triphenylphosphine)nickel(II) dichloride, nickel(II) iodide, nickel(II) bromide, nickel(II) bromide hydrate, nickel(II) bromide trihydrate, nickel(II) chloride, nickel(II) chloride hydrate, nickel(II) chloride hexahydrate, nickel(II) fluoride, nickel(II) acetate tetrahydrate, nickel(II) sulfate, nickel(II) sulfate hexahydrate, nickel(II) sulfate heptahydrate, nickel(II) nitrate hexahydrate, nickel(II) acetylacetonate, nickel(II) perchlorate hexahydrate, nickel(II) hydroxide, trifluoromethanesulfonyl nickel(II), nickel(II) hexafluoroacetylacetonate hydrate, nickel(II) oxalate dihydrate, and the like. Examples of the copper compound include monovalent and divalent copper compounds. Specifically, the examples include copper (I) iodide, copper (I) bromide, copper(I) chloride, copper(I) oxide, copper(I) acetate, copper(I) trifluoromethanesulfonate benzene complex, tetrakisacetonitrile copper(I) triflate, copper(I) cyanide, copper(II) bromide, copper(II) oxide, copper(II) chloride, copper(II) chloride dihydrate, copper(II) fluoride, copper(II) fluoride hydrate, copper(II) nitrate hydrate, copper(II) nitrate trihydrate, copper(II) sulfate, copper(II) sulfate pentahydrate, copper(II) acetate, copper(II) acetate monohydrate, copper(II) trifluoromethanesulfonate, copper(II) acetylacetonate, copper(II) tetrafluoroborate hydrate, copper(II) perchlorate hexahydrate, copper(II) hexafluoroacetylacetonate hydrate, copper(II) trifluoroacetate, and the like. Examples of the ruthenium compound include divalent and trivalent ruthenium compounds. Specifically, the examples include dichloro(mesitylene)ruthenium(II) dimer, dichloro(p-cymene)ruthenium(II) dimer, diiodo(p-cymene)ruthenium(II) dimer, dichloro(hexamethylbenzene)ruthenium(II) dimer, dichloro(1,5-cyclooctadiene)ruthenium(II), tris(acetonitrile)cyclopentadienylruthenium(II) hexafluorophosphate, ruthenium(III) iodide, ruthenium(III) chloride, ruthenium(III) chloride trihydrate, ruthenium(III) chloride hexahydrate, ruthenium(III) iodide hydrate, ruthenium(III) acetylacetonate, and the like. Examples of the rhodium compound include monovalent, divalent, and trivalent rhodium compounds. Specifically, the examples include chloro(1,5-hexadiene)rhodium(I) dimer, bis(1,5-cyclooctadiene)rhodium(I) trifluoromethanesulfonate, bis(1,5-cyclooctadiene)rhodium(I) hexafluoroantimonate, bis(norbornadiene)rhodium(I) trifluoromethanesulfonate, bis(1,5-cyclooctadiene)rhodium(I) tetrafluoroborate, chloro(1,5-cyclooctadiene)rhodium(I) dimer, acetylacetonatobis(ethylene)rhodium(I), (acetylacetonato)(1,5-cyclooctadiene)rhodium(I), bis(acetonitrile)(1,5-cyclooctadiene)rhodium(I) tetrafluoroborate, chlorobis(cyclooctene)rhodium(I) dimer, (acetylacetonato)(norbornadiene)rhodium(I), bis(1,5-cyclooctadiene)rhodium(I) tetrakis[bis(3,5-trifluoromethyl)phenyl]borate, hydridotetrakis(triphenylphosphine)rhodium(I), bis(1,5-cyclooctadiene)dirhodium(I) dichloride, (acetylacetonato)dicarbonylrhodium(I), rhodium(II) octanoate dimer, rhodium(II) trifluoroacetate dimer, rhodium(II) triphenylacetate dimer, rhodium(II) acetate dimer, rhodium(II) acetate dimer dihydrate, rhodium(II) trimethylacetate dimer, rhodium(III) acetylacetonate, rhodium(III) chloride, rhodium(III) chloride hydrate, rhodium(III) nitrate hydrate, and the like. Examples of the palladium compound include zerovalent, monovalent and divalent palladium compounds. Specifically, the examples include tetrakis(triphenylphosphine)palladium(0), bis(dibenzylideneacetone)palladium(0), bis(triphenylphosphine)palladium(II) dichloride, palladium(II) iodide, palladium(II) bromide, palladium(II) chloride, palladium(II) acetate, palladium(II) pivalate, palladium(II) acetylacetonate, bis(acetonitrile)palladium(II) chloride, bis(acetonitrile)palladium(II) bromide, bis(benzonitrile)palladium(II) chloride, bis(benzonitrile)palladium(II) bromide, palladium(II) sulfate, palladium(II) nitrate hydrate, palladium(II) nitrate dihydrate, palladium(II) trifluoroacetate, palladium(n-allyl) chloride dimer, palladium(n-cinnamyl) chloride dimer, tetrakis(acetonitrile)palladium(II) tetrafluoroborate, palladium(II) hexafluoroacetylacetonate, palladium(II) cyanide, palladium(II) propionate, (2-methylallyl)palladium(II) chloride dimer, dichloro(1,5-cyclooctadiene)palladium(II), sodium tetrachloropalladate(II), potassium tetrachloropalladate(II), and the like, and preferable is palladium(n-allyl) chloride dimer. Examples of the silver compound include monovalent and divalent silver compounds. Specifically, the examples include silver(I) bromide, silver(I) chloride, silver(I) fluoride, silver(I) nitrate, silver(I) acetate, silver(I) carbonate, silver(I) tetrafluoroborate, silver(I) sulfate, silver(I) perchlorate, silver(I) perchlorate monohydrate, silver(I) trifluoroacetate, silver(I) nitrite, silver(I) trifluoromethanesulfonate, silver(I) hexafluorophosphate, silver(I) cyanate, silver(I) benzoate, silver (acetylacetonate), silver(I) methanesulfonate, silver(I) p-toluenesulfonate, silver (II) fluoride, silver (II) picolinate, and the like. Examples of the osmium compound include trivalent osmium compounds. Specifically, the examples include osmium(III) chloride, osmium(III) chloride hydrate, and the like. Examples of the iridium compound include monovalent and trivalent iridium compounds. Specifically, the examples include (1,5-cyclooctadiene)(methoxy)iridium(I) dimer, bis(cyclooctadiene)iridium(I)tetrakis[3,5-bis(trifluorometh yl)phenyl]borate, bis(1,5-cyclooctadiene)iridium(I) tetrafluoroborate, (1,5-cyclooctadiene)(hexafluoroacetylacetonato)iridium(I), (acetylacetonato)(1,5-cyclooctadiene)iridium(I), bis(1,5-cyclooctadiene)diiridium(I) dichloride, (acetylacetonato)dicarbonyliridium(I), iridium(III) chloride, iridium(III) chloride hydrate, iridium(III) acetylacetonate, and the like. Examples of the platinum compound include the divalent and tetravalent platinum compounds. Specifically, the examples include platinum(II) iodide, platinum(II) bromide, platinum(II) chloride, platinum(II) cyanide, platinum(II) acetylacetonate, dichloro(1,5-cyclooctadiene)platinum(II), potassium tetrachloroplatinate(II), cis-bis(acetonitrile)dichloroplatinum(II), cis-bis(benzonitrile)dichloroplatinum(II), platinum (IV) chloride, potassium hexachloroplatinate(IV), and the like. Examples of the gold compound include monovalent and trivalent gold compounds. Specifically, the examples include gold(I) iodide, gold(I) chloride, gold(I) cyanide, gold(III) bromide, gold(III) chloride hydrate, gold(III) chloride trihydrate, potassium tetrachloroaurate(III), and the like.

In the production of the complex of the present invention, a solvent is desirably also present. The solvent is not particularly limited, as long as it does not inhibit the coordination of the phosphorous compound of the present invention to the transition metal compound. Furthermore, an acid and a base may also be present as necessary. The complex of the present invention obtained in this manner may be post-treated, purified, and isolated, as necessary. Examples of the post-treatment method include washing of a reaction liquid, extraction of a product, filtration of a precipitate, evaporation of a solvent, crystallization by adding a solvent, and the like. These post-treatments may be performed alone or in combination. Examples of the purification and isolation methods include decoloration using an adsorbent such as active carbon and silica gel, column chromatography, re-crystallization, sublimation, and the like. These may be performed alone or in combination. When the complex of the present invention is used as a catalyst in an organic synthesis reaction, the reaction liquid may be used directly as a catalyst solution, or may be used after post-treated, purified, and isolated, as necessary.

### EXAMPLES

Hereinafter, the phosphorous compound of the present invention will be described in detail based on Examples. Nevertheless, the present invention is not limited to these Examples at all. Note that, in Examples, the following apparatuses were used for the measurement of physical properties.
1) ¹H-NMR spectra: Varian Mercury plus 300 (manufactured by Varian, Inc.)
2) ³¹P-NMR spectra: Varian Mercury plus 300 (manufactured by Varian, Inc.)

### External standard substance: phosphoric acid

### (Example 1) Synthesis of dicyclohexyl(3-phenylbicyclo[2.2.1]hepta-2,5-dien-2-yl)phos phine oxide (Structural Formula (6)) (Reaction Equation 2)

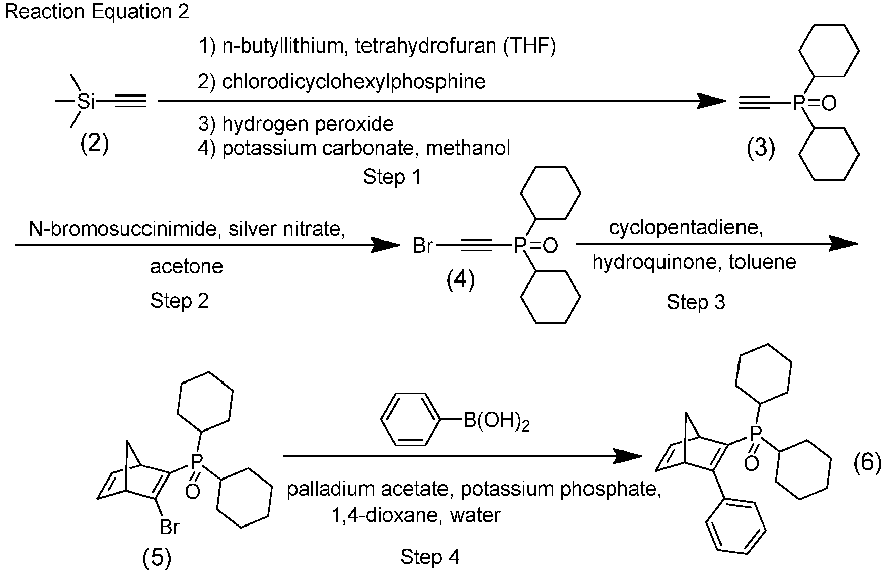

### Step 1: Synthesis of dicyclohexyl(ethynyl)phosphine oxide (Structural Formula (3))

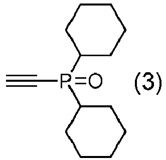

A 500 mL 4-necked reaction flask equipped with a three-way stopcock, a Teflon^{®} coated magnetic stirring bar, a dropping funnel, and a thermometer was evacuated and the inside of the flask was purged with nitrogen. To this flask, trimethylsilylacetylene (2) (6.78 g, 69.0 mmol, 1.07 equivalents) and tetrahydrofuran (THF) (135 mL) were successively charged under nitrogen stream. The flask was cooled to 5°C with an ice water bath. Into the dropping funnel, n-butyllithium in a n-hexane solution (40. 8 mL, 1.58mol/L, 64.5 mmol, 1.0 equivalents) was charged, and added dropwise to the solution in the flask over 15 minutes. Then, the mixture was stirred at 5°C for 40 minutes. Subsequently, chlorodicyclohexylphosphine (15.0 g, 64.5 mmol, 1.0 equivalents) was charged into the dropping funnel, and added dropwise to the reaction solution over 15 minutes. After that, the ice water bath was removed, and the temperature was raised to room temperature. The mixture was further stirred for 1 hour. After the reaction solution was concentrated under reduced pressure, toluene (135 mL) was added to the obtained residue, and cooled to 15°C with a water bath. Then, 10% hydrogen peroxide (60 mL) was charged into the dropping funnel, and added dropwise to the reaction solution at such a speed that the internal temperature never exceeded 30°C. Subsequently, the mixture was further stirred at room temperature for 90 minutes. The aqueous layer was separated from the reaction solution. After washed with water, the organic layer was concentrated under reduced pressure. Then, methanol (135 mL) and potassium carbonate (19.2 g, 138.9 mmol, 2.2 equivalents) were added to the obtained residue, and the reaction mixture was stirred at room temperature for 30 minutes. Water (100 mL) was added to the reaction solution, and methanol was evaporated under reduced pressure. The resulting aqueous layer was extracted with toluene. After washed with water, the organic layer was concentrated to dryness. Thus, 14.6 g of the title compound (3) was obtained as a pale red solid. Isolated yield: 95.0%. ¹H NMR (300 MHz, CDCl₃): δ 2.95 (d, J=4.0 Hz, 1H), 2.06-1.22 (m, 22H).
³¹P NMR (121 MHz, CDCl₃): δ 36.1.

### Step 2: Synthesis of (bromoethynyl)dicyclohexylphosphine oxide (Structural Formula (4))

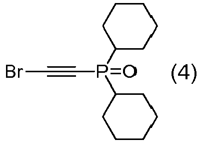

A 500 mL 4-necked reaction flask equipped with a three-way stopcock, a Teflon^{®} coated magnetic stirring bar, and a thermometer was evacuated and the inside of the flask was purged with nitrogen. To this flask, dicyclohexyl(ethynyl)phosphine oxide (3) (14.5 g, 60.8 mmol, 1.0 equivalents), acetone (245 mL), N-bromosuccinimide (12.0 g, 67.2 mmol, 1.1 equivalents), and silver nitrate (0.311 g, 1.83 mmol, 3.0 mol%) were successively charged under nitrogen stream, and the reaction mixture was stirred at room temperature for 4 hours. The reaction solution was concentrated under reduced pressure, and toluene (150 mL) was added to the obtained residue, followed by suction-filtering using Celite 545. After washed with water, the filtrate was concentrated under reduced pressure, and heptane (200 mL) was added to the residue. A powder was filtered from the obtained suspension by suction filtering, and further dried under reduced pressure. Thus, 15.1 g of the title compound (4) was obtained as a colorless powder. Isolated yield: 78.3%.
¹H NMR (300 MHz, CDCl₃): δ 2.01-1.60 (m, 12H), 1.59-1.16 (m, 10H).
³¹P NMR (121 MHz, CDCl₃): δ 37.0.

### Step 3: Synthesis of (3-bromobicyclo[2.2.1]hepta-2,5-dien-2-yl)dicyclohexylphosp hine oxide (Structural Formula (5))

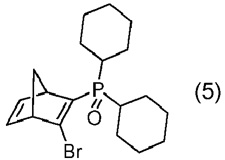

To a 100 mL autoclave equipped with a Teflon^{®} coated stirring bar, (bromoethynyl)dicyclohexylphosphine oxide (4) (7.5 g, 23.6 mmol, 1.0 equivalents) and hydroquinone (0.075 g, 0.68 mmol, 2.9 mol%) were charged, and the inside of the autoclave was purged with nitrogen. Then, cyclopentadiene (7.9 mL, 94.4 mmol, 4.0 equivalents) and toluene (8 mL) were added thereto under nitrogen stream. Subsequently, the instrument was heated, and the mixture was stirred at 85°C for 9 hours. After cooled to room temperature, the reaction solution was directly purified by silica gel column chromatography (eluents:ethyl acetate/methanol=20/1). Thus, 7.3 g of the title compound (5) was obtained as a colorless solid. Isolated yield: 80.7%.
¹H NMR (300 MHz, CDCl₃): δ 6.92-6.84 (m, 2H), 4.20-4.14 (m, 1H), 3.74-3.68 (m, 1H), 2.35-2.28 (m, 1H), 2.18-1.60 (m, 13H), 1.58-1.10 (m, 10H).
³¹P NMR (121 MHz, CDCl₃): δ 46.9.

### Step 4: Synthesis of dicyclohexyl(3-phenylbicyclo[2.2.1]hepta-2,5-dien-2-yl)phos phine oxide (Structural Formula (6))

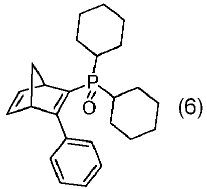

A 50 mL 4-necked reaction flask equipped with a three-way stopcock, a Teflon^{®} coated magnetic stirring bar, and a thermometer was evacuated and the inside of the flask was purged with nitrogen. To this flask, (3-bromobicyclo[2.2.1]hepta-2,5-dien-2-yl)dicyclohexylphosp hine oxide (5) (1.92g, 5.0 mmol, 1.0 equivalents), 1,4-dioxane (10 mL), water (10 mL), phenylboronic acid (0.91 g, 7.5 mmol, 1.5 equivalents), potassium phosphate (2.12 g, 10.0 mmol, 2.0 equivalents), and palladium acetate (0.0224 g, 0.1 mmol, 2.0 mol%) were successively charged under nitrogen stream. Then, the flask was heated with an oil bath, and the mixture was stirred at 80°C for 3 hours. The reaction solution was cooled to room temperature, and toluene was added thereto and stirred. Subsequently, the aqueous layer was separated. After dried over sodium sulfate, the organic layer was concentrated under reduced pressure. The obtained residue was purified by silica gel column chromatography (eluents: ethyl acetate/methanol=25/1). Thus, 0.90 g of the title compound (6) was obtained as a colorless solid. Isolated yield: 47.3%. ¹H NMR (300 MHz, CD₃OD): δ 7.52-7.45 (m, 2H), 7.38-7.25 (m, 3H), 6.98-6.88 (m, 2H), 4.00-3.94 (m, 1H), 3.88-3.83 (m, 1H), 2.30-2.25 (m, 1H), 2.06-1.02 (m, 23H).
³¹P NMR (121 MHz, CD₃OD): δ 45.0.

### (Example 2) Synthesis of dicyclohexyl(3-phenylbicyclo[2.2.1]hepta-2,5-dien-2-yl)phos phine (Structural Formula (7)) (Reaction Equation 3)

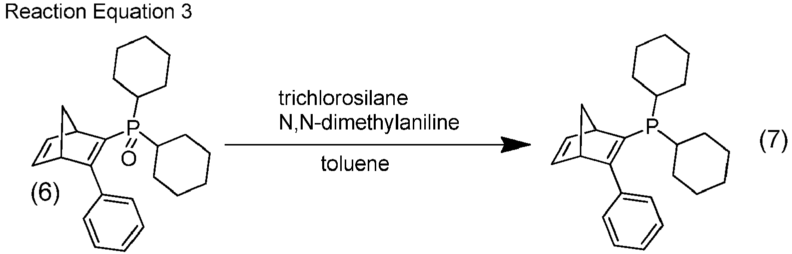

To a 200 mL 4-necked reaction flask equipped with a three-way stopcock, a Teflon^{®} coated stirring bar, a condenser, and a thermometer, dicyclohexyl(3-phenylbicyclo[2.2.1]hepta-2,5-dien-2-yl)phos phine oxide (6) (1.90 g, 5.0 mmol, 1.0 equivalents), toluene (50 mL), and N,N-dimethylaniline (6.4 mL, 50.0 mmol, 10.0 equivalents) were successively charged. After the solution was degassed under reduced pressure, the flask was purged with nitrogen and further cooled to 5°Cwith an ice water bath. Then, using a syringe, trichlorosilane (2.5 mL, 25.0 mmol, 5.0 equivalents) was added dropwise to the solution at such a speed that the internal temperature never exceeded 10°C. Subsequently, the temperature was raised gradually over 6 hours to 100°C with an oil bath. The reaction solution was cooled to 5°C with an ice water bath. A dropping funnel was attached to the reaction flask, and an aqueous solution of sodium hydroxide (62.5 mL, 2.0 mol/L, 125.0 mmol, 25.0 equivalents) was charged therein and added dropwise to the solution at such a speed that the internal temperature never exceeded 30°C. The reaction solution was heated with an oil bath, stirred at 60°C for 2 hours, and cooled to room temperature. Thereafter, the aqueous layer was separated. The organic layer was washed with water and 1 N hydrochloric acid, dried over sodium sulfate, and then concentrated under reduced pressure. After purified by silica gel column chromatography (eluent: toluene), the obtained residue was further re-crystallized from toluene/methanol. Thus, 0.61 g of the title compound (7) was obtained as a colorless crystal. Isolated yield: 33.5%.
¹H NMR (300 MHz, CD₂Cl₂): δ 7.55-7.50 (m, 2H), 7.34-7.28 (m, 2H), 7.24-6.97 (m, 1H), 6.84-6.79 (m, 2H), 3.96-3.92 (m, 1H), 3.85-3.81 (m, 1H), 2.16-2.11 (m, 1H), 2.02-1.97 (m, 1H), 1.96-1.58 (m, 12H), 1.40-0.90 (m, 10H).
³¹P NMR (121 MHz, CD₂Cl₂): δ -23.5.

### (Example 3) Synthesis of dicyclohexyl(3-(2-methoxyphenyl)bicyclo[2.2.1]hepta-2,5-die n-2-yl)phosphine oxide (Structural Formula (8)) (Reaction Equation 4)

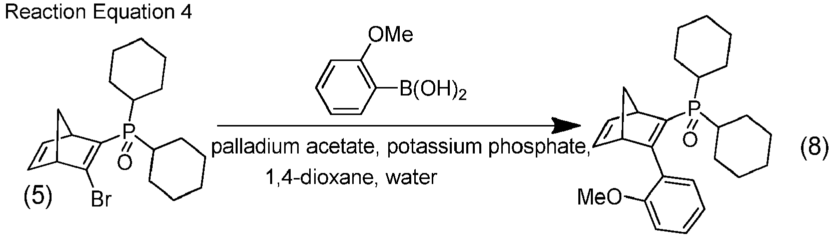

A 50 mL 4-necked reaction flask equipped with a three-way stopcock, a Teflon^{®} coated magnetic stirring bar, and a thermometer was evacuated and the inside of the flask was purged with nitrogen. To this flask, (3-bromobicyclo[2.2.1]hepta-2,5-dien-2-yl)dicyclohexylphosp hine oxide (5) (0.77 g, 2.0 mmol, 1.0 equivalents), 1,4-dioxane (4 mL), water (4 mL), 2-methoxyphenylboronic acid (0.76 g, 5.0 mmol, 2.5 equivalents), potassium phosphate (1.59 g, 7.5 mmol, 3.75 equivalents), and palladium acetate (0.0135 g, 0.06 mmol, 3.0 mol%) were successively charged under nitrogen stream. Then, the flask was heated with an oil bath, and the mixture was stirred at 80°C for 3 hours. The reaction solution was cooled to room temperature, and toluene was added thereto and stirred. Subsequently, the aqueous layer was separated. After dried over sodium sulfate, the organic layer was concentrated under reduced pressure. The obtained residue was purified by silica gel column chromatography (eluents: ethyl acetate/methanol=30/1). Thus, 0.69 g of the title compound (8) was obtained as a colorless solid. Isolated yield: 84.0%.
¹H NMR (300 MHz, CD₃OD): δ 7.37-7.30 (m, 1H), 7.03-6.88 (m, 5H), 4.04-4.00 (m, 1H), 3.82 (s, 3H), 3.73-3.70 (m, 1H), 2.35-2.30 (m, 1H), 2.02-1.98 (m, 1H), 1.92-1.50 (m, 12H), 1.42-0.95 (m, 10H).
³¹P NMR (121 MHz, CD₃OD): δ 45.8.

### (Example 4) Synthesis of dicyclohexyl(3-(2-methoxyphenyl)bicyclo[2.2.1]hepta-2,5-die n-2-yl)phosphine (Structural Formula (9)) (Reaction Equation 5)

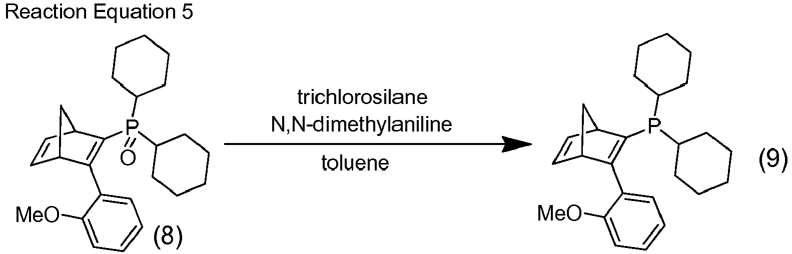

To a 100 mL 4-necked reaction flask equipped with a three-way stopcock, a Teflon^{®} coated magnetic stirring bar, a condenser, and a thermometer, dicyclohexyl(3-(2-methoxyphenyl)bicyclo[2.2.1]hepta-2,5-die n-2-yl)phosphine oxide (8) (0.90 g, 2.2 mmol, 1.0 equivalents), toluene (22 mL), and N,N-dimethylaniline (2.8 mL, 22.0 mmol, 10.0 equivalents) were successively charged. After the solution was degassed under reduced pressure, the flask was purged with nitrogen and further cooled to 5°C with an ice water bath. Then, using a syringe, trichlorosilane (1.1 mL, 11.0 mmol, 5.0 equivalents) was added dropwise to the solution at such a speed that the internal temperature never exceeded 10°C. Subsequently, the temperature was raised gradually over 6 hours to 100°C with an oil bath. The mixture was further stirred at 100°C for 16 hours. The reaction solution was cooled to 5°C with an ice water bath. A dropping funnel was attached to the reaction flask, and an aqueous solution of sodium hydroxide (27.5 mL, 2.0 mol/L, 55.0 mmol, 25.0 equivalents) was charged therein and added dropwise to the solution at such a speed that the internal temperature never exceeded 30°C. The reaction solution was heated with an oil bath, stirred at 60 °C for 2 hours, and cooled to room temperature. Thereafter, the aqueous layer was separated. The organic layer was washed with water and 1 N hydrochloric acid, dried over sodium sulfate, and then concentrated under reduced pressure. After purified by silica gel column chromatography (eluent: toluene), the obtained residue was further re-crystallized from toluene/methanol. Thus, 0.34 g of the title compound (9) was obtained as a colorless crystal. Isolated yield: 39.0%.
¹H NMR (300 MHz, CD₂Cl₂): δ 7.58-7.54 (m, 1H), 7.11-7.06 (m, 1H), 6.98-6.92 (m, 1H), 6.86-6.82 (m, 2H), 6.57-6.53 (m, 1H), 3.91-3.88 (m, 1H), 3.82-3.78 (m, 1H), 3.30 (s, 3H), 2.34-2.30 (m, 1H), 2.13-2.10 (m, 1H), 1.94-1.52 (m, 12H), 1.43-1.02 (m, 10H).
³¹P NMR (121 MHz, CD₂Cl₂): δ -24.3.

### (Example 5) Synthesis of dicyclohexyl(3-phenylbicyclo[2.2.1]hept-2-en-2-yl)phosphine oxide (Structural Formula (11)) (Reaction Equation 6)

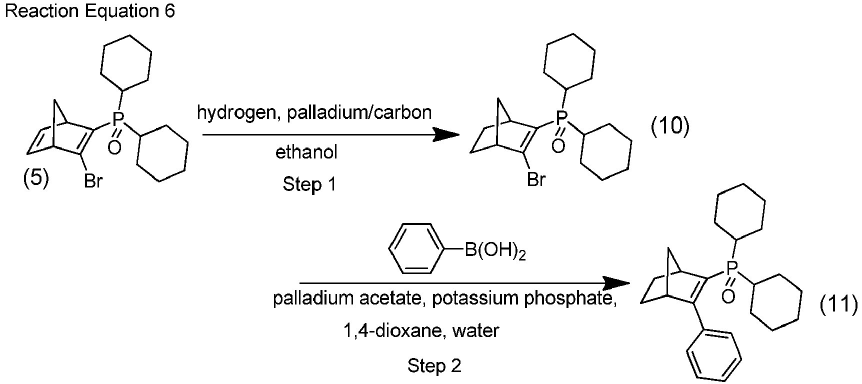

### Step 1: Synthesis of (3-bromobicyclo[2.2.1]hept-2-en-2-yl)dicyclohexylphosphine oxide (Structural Formula (10))

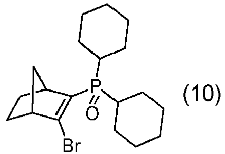

To a 200 mL 4-necked reaction flask equipped with a three-way stopcock, a Teflon^{®} coated magnetic stirring bar, and a thermometer, (3-bromobicyclo[2.2.1]hepta-2,5-dien-2-yl)dicyclohexylphosp hine oxide (5) (3.83 g, 10.0 mmol, 1.0 equivalents) and ethanol (100 mL) were successively charged. After degassed under reduced pressure, the flask was purged with nitrogen. Under nitrogen stream, 5% palladium/carbon (0.019 g, 0.5 weight % relative to the weight of (5)) were added to the solution. After degassing under reduced pressure, the flask was purged with hydrogen using a rubber balloon. After stirred at 30°C and normal pressure under the hydrogen atmosphere for 2 hours, the reaction solution was suction-filtered using Celite 545, and the filtrate was concentrated under reduced pressure. The obtained residue was purified by silica gel column chromatography (eluents:ethyl acetate/methanol=20/1). Thus, 3.76 g of the title compound (10) was obtained as a colorless solid. Isolated yield: 97.6%.
¹H NMR (300 MHz, CDCl₃): δ 3.46-3.42 (m, 1H), 3.09-3.04 (m, 1H), 2.26-2.13 (m, 2H), 2.06-1.12 (m, 26H).
³¹P NMR (121 MHz, CDCl₃): δ 47.2.

### Step 2: Synthesis of dicyclohexyl(3-phenylbicyclo[2.2.1]hept-2-en-2-yl)phosphine oxide (Structural Formula (11))

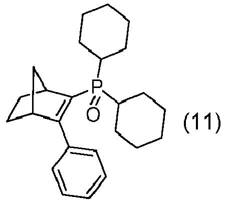

A 50 mL 4-necked reaction flask equipped with a three-way stopcock, a Teflon^{®} coated magnetic stirring bar, and a thermometer was evacuated and the inside of the flask was purged with nitrogen. To this flask, (3-bromobicyclo[2.2.1]hept-2-en-2-yl)dicyclohexylphosphine oxide (10) (0.963 g, 2.5 mmol, 1.0 equivalents), 1,4-dioxane (5 mL), water (5 mL), phenylboronic acid (0.457 g, 3.75 mmol, 1.5 equivalents), potassium phosphate (1.06 g, 5.0 mmol, 2.0 equivalents), and palladium acetate (0.0112 g, 0.05 mmol, 2.0 mol%) were successively charged under nitrogen stream. Then, the flask was heated with an oil bath, and the mixture was stirred at 80°C for 6 hours. The reaction solution was cooled to room temperature, and toluene was added thereto and stirred. Subsequently, the aqueous layer was separated. After dried over sodium sulfate, the organic layer was concentrated under reduced pressure. The obtained residue was purified by silica gel column chromatography (eluents: ethyl acetate/methanol=20/1). Thus, 0.86 g of the title compound (11) was obtained as a colorless solid. Isolated yield: 89.9%. ¹H NMR (300 MHz, CDCl₃): δ 7.39-7.27 (m, 5H), 3.35-3.30 (m, 1H), 3.21-3.17 (m, 1H), 2.11-2.01 (m, 1H), 1.92-0.84 (m, 27H). ³¹P NMR (121 MHz, CDCl₃): δ 44.9.

### (Example 6) Synthesis of dicyclohexyl(3-phenylbicyclo[2.2.1]hept-2-en-2-yl)phosphine (Structural Formula (12)) (Reaction Equation 7)

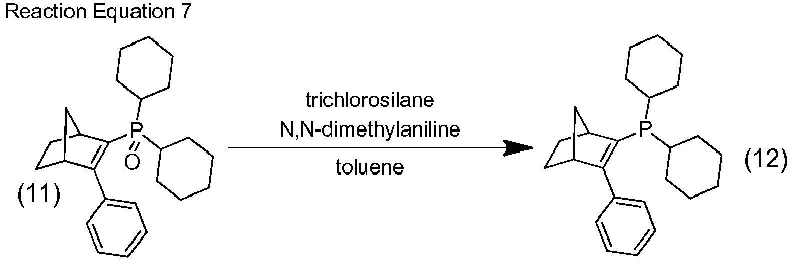

To a 100 mL 4-necked reaction flask equipped with a three-way stopcock, a Teflon^{®} coated magnetic stirring bar, a condenser, and a thermometer, dicyclohexyl(3-phenylbicyclo[2.2.1]hept-2-en-2-yl)phosphine oxide (0.84 g, 2.2 mmol, 1.0 equivalents) (11), toluene (22 mL), and N,N-dimethylaniline (2.8 mL, 22.0 mmol, 10.0 equivalents) were successively charged. After the solution was degassed under reduced pressure, the flask was purged with nitrogen and further cooled to 5°C with an ice water bath. Then, using a syringe, trichlorosilane (1.1 mL, 11.0 mmol, 5.0 equivalents) was added dropwise to the solution at such a speed that the internal temperature never exceeded 10°C. Subsequently, the temperature was raised gradually over 7 hours to 100°C with an oil bath. The mixture was further stirred at 100°C for 17 hours. The reaction solution was cooled to 5°C with an ice water bath. A dropping funnel was attached to the reaction flask, and an aqueous solution of sodium hydroxide (27.5 mL, 2.0 mol/L, 55.0 mmol, 25.0 equivalents) was charged therein and added dropwise to the solution at such a speed that the internal temperature never exceeded 30°C. The reaction solution was heated with an oil bath, stirred at 60°C for 2 hours, and cooled to room temperature. Thereafter, the aqueous layer was separated. The organic layer was washed with water and 1 N hydrochloric acid, dried over sodium sulfate, and then concentrated under reduced pressure. The obtained residue was re-crystallized from toluene/methanol. Thus, 0.34 g of the title compound (12) was obtained as a colorless crystal. Isolated yield: 41.9%. ¹H NMR (300 MHz, CD₂ Cl₂): δ 7.54-7.48 (m, 2H), 7.32-7.25 (m, 2H), 7.24-7.17 (m, 1H), 3.26-3.22 (m, 1H), 3.22-3.18 (m, 1H), 1.96-1.61 (m, 16H), 1.38-1.20 (m, 12H).
³¹P NMR (121 MHz, CD₂Cl₂): δ -19.5.

### (Example 7) Synthesis of dicyclohexyl(3-(2-methoxyphenyl)bicyclo[2.2.1]hept-2-en-2-y l)phosphine oxide (Structural Formula (13)) (Reaction Equation 8)

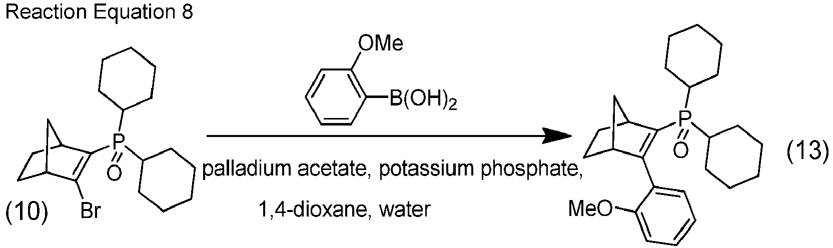

A 50 mL 4-necked reaction flask equipped with a three-way stopcock, a Teflon^{®} coated magnetic stirring bar, and a thermometer was evacuated and the inside of the flask was purged with nitrogen. To this flask, (3-bromobicyclo[2.2.1]hept-2-en-2-yl)dicyclohexylphosphine oxide (10) (1.54 g, 4.0 mmol, 1.0 equivalents), 1,4-dioxane (8 mL), water (8 mL), 2-methoxyphenylboronic acid (1.52 g, 10.0 mmol, 2.5 equivalents), potassium phosphate (3.18 g, 15.0 mmol, 3.75 equivalents), and palladium acetate (0.0269 g, 0.12 mmol, 3.0 mol%) were successively charged under nitrogen stream. Then, the flask was heated with an oil bath, and the mixture was stirred at 80°C for 1 hour. The reaction solution was cooled to room temperature, and toluene was added thereto and stirred. Subsequently, the aqueous layer was separated. After dried over sodium sulfate, the organic layer was concentrated under reduced pressure. The obtained residue was purified by silica gel column chromatography (eluents: ethyl acetate/methanol=25/1). Thus, 1.63 g of the title compound (13) was obtained as a colorless solid. Isolated yield: 98.5%.
¹H NMR (300 MHz, CDCl₃): δ 7.32-7.28 (m, 1H), 7.02-6.97 (m, 1H), 6.92-6.84 (m, 2H), 3.79 (s, 3H), 3.38-3.35 (m, 1H), 3.08-3.03 (m, 1H), 2.21-1.90 (m, 1H), 1.89-0.91 (m, 27H).
³¹P NMR (121 MHz, CDCl₃): δ 46.4.

### (Example 8) Synthesis of dicyclohexyl(3-(2-methoxyphenyl)bicyclo[2.2.1]hept-2-en-2-y l)phosphine (Structural Formula (14)) (Reaction Equation 9)

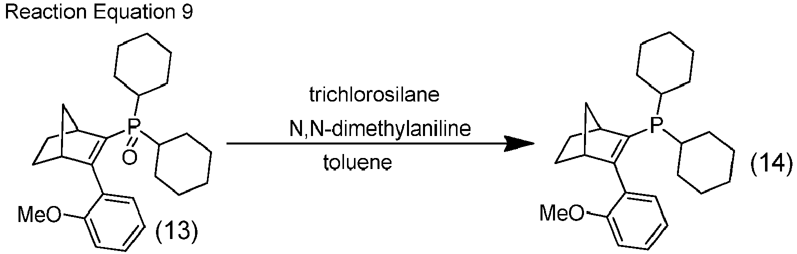

To a 200 mL 4-necked reaction flask equipped with a three-way stopcock, a Teflon^{®} coated magnetic stirring bar, a condenser, and a thermometer, dicyclohexyl(3-(2-methoxyphenyl)bicyclo[2.2.1]hept-2-en-2-y l)phosphine oxide (13) (1.63 g, 3.94 mmol, 1.0 equivalents), toluene (40 mL), and N,N-dimethylaniline (5.0 mL, 39.4 mmol, 10.0 equivalents) were successively charged. After the solution was degassed under reduced pressure, the flask was purged with nitrogen and further cooled to 5°C with an ice water bath. Then, using a syringe, trichlorosilane (2.0 mL, 19.7 mmol, 5.0 equivalents) was added dropwise to the solution at such a speed that the internal temperature never exceeded 10°C. Subsequently, the temperature was raised gradually over 6 hours and 30 minutes to 100°C with an oil bath. The mixture was further stirred at 100°C for 16 hours. The reaction solution was cooled to 5°C with an ice water bath. A dropping funnel was attached to the reaction flask, and an aqueous solution of sodium hydroxide (50.0 mL, 2.0 mol/L, 100.0 mmol, 25.4 equivalents) was charged therein and added dropwise to the solution at such a speed that the internal temperature never exceeded 30°C. The reaction solution was heated with an oil bath, stirred at 60°C for 2 hours, and cooled to roomtemperature. Thereafter, the aqueous layer was separated. The organic layer was washed with water and 1 N hydrochloric acid, dried over sodium sulfate, and then concentrated under reduced pressure. The obtained residue was re-crystallized from toluene/methanol. Thus, 0.97 g of the title compound (14) was obtained as a colorless crystal. Isolated yield: 62.1%.
¹H NMR (300 MHz, CD₂Cl₂): δ 7.25-7.19 (m, 1H), 7.06-7.01 (m, 1H), 6.09-6.82 (m, 2H), 3.77 (s, 3H), 3.18-3.14 (m, 1H), 3.07-3.03 (m, 1H), 1.88-1.59 (m, 16H), 1.40-0.90 (m, 12H). ³¹P NMR (121 MHz, CD₂Cl₂): δ -18.9.

### (Example 9) Synthesis of dicyclohexyl(3-(2,6-dimethoxyphenyl)bicyclo[2.2.1]hept-2-en -2-yl)phosphine oxide (Structural Formula (15)) (Reaction Equation 10)

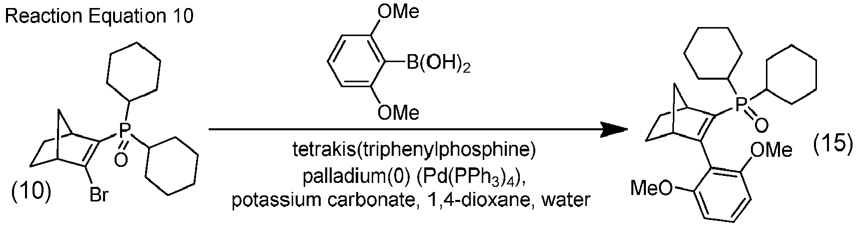

A 50 mL 4-necked reaction flask equipped with a three-way stopcock, a Teflon^{®} coated magnetic stirring bar, and a thermometer was evacuated and the inside of the flask was purged with nitrogen. To this flask, (3-bromobicyclo[2.2.1]hept-2-en-2-yl)dicyclohexylphosphine oxide (10) (1.16 g, 3.0 mmol, 1.0 equivalents), 1,4-dioxane (12 mL), water (12 mL), 2,6-dimethoxyphenylboronic acid (1.09 g, 6.0 mmol, 2.0 equivalents), potassium carbonate (1.66 g, 12.0 mmol, 4.0 equivalents), and tetrakis(triphenylphosphine)palladium(0) (0.173g, 0.15 mmol, 5 mol%) were successively charged under nitrogen stream. While the flask was being heated with an oil bath, the mixture was stirred at 80°C for 2 hours. Then, 2,6-dimethoxyphenylboronic acid (1.09 g, 6.0 mmol, 2.0 equivalents) was added thereto under nitrogen stream, and the mixture was further stirred at 80°C for 15 hours. The reaction solution was cooled to room temperature, and toluene was added thereto and stirred. Subsequently, the aqueous layer was separated. After dried over sodium sulfate, the organic layer was concentrated under reduced pressure. The obtained residue was purified by silica gel column chromatography (eluents: ethyl acetate/methanol=20/1). Thus, 0.90 g of the title compound (15) was obtained as a colorless solid. Isolated yield: 67.8%. ¹H NMR (300 MHz, CDCl₃): δ 7.22-7.16 (m, 1H), 6.53-6.49 (m, 2H), 3.75 (s, 3H), 3.69 (s, 3H), 3.36-3.30 (m, 1H), 2.91-2.86 (m, 1H), 1.91-0.96 (m, 28H).
³¹P NMR (121 MHz, CDCl₃): δ 44.8.

### (Example 10) Synthesis of dicyclohexyl(3-(2,6-dimethoxyphenyl)bicyclo[2.2.1]hept-2-en -2-yl)phosphine (Structural Formula (16)) (Reaction Equation 11)

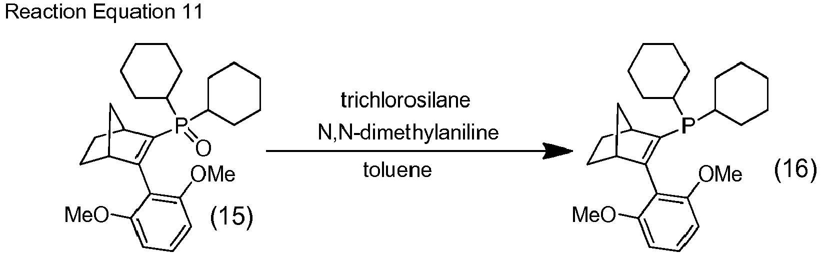

To a 100 mL 4-necked reaction flask equipped with a three-way stopcock, a Teflon^{®} coated magnetic stirring bar, a condenser, and a thermometer, dicyclohexyl(3-(2,6-dimethoxyphenyl)bicyclo[2.2.1]hept-2-en -2-yl)phosphine oxide (15) (0.885 g, 2.0 mmol, 1.0 equivalents), toluene (20 mL), and N,N-dimethylaniline (2.5 mL, 20.0 mmol, 10.0 equivalents) were successively charged. After the solution was degassed under reduced pressure, the flask was purged with nitrogen and further cooled to 5°C with an ice water bath. Then, using a syringe, trichlorosilane (1.0 mL, 10.0 mmol, 5.0 equivalents) was added dropwise to the solution at such a speed that the internal temperature never exceeded 10°C. Subsequently, the temperature was raised gradually over 6 hours to 100°C with an oil bath. The reaction solution was cooled to 5°C with an ice water bath. A dropping funnel was attached to the reaction flask, and an aqueous solution of sodium hydroxide (25.0 mL, 2.0 mol/L, 50.0 mmol, 25.0 equivalents) was charged therein and added dropwise to the solution at such a speed that the internal temperature never exceeded 30°C. The reaction solution was heated with an oil bath, stirred at 60°C for 2 hours, and cooled to room temperature. Thereafter, the aqueous layer was separated. The organic layer was washed with water and 1 N hydrochloric acid, dried over sodium sulfate, and then concentrated under reduced pressure. The obtained residue was re-crystallized from toluene/methanol. Thus, 0.35 g of the title compound (16) was obtained as a colorless crystal. Isolated yield: 41.0%.
¹H NMR (300 MHz, CD₂Cl₂): δ 7.19-7.13 (m, 1H), 6.54-6.51 (m, 2H), 3.73 (s, 3H), 3.65 (s, 3H), 3.16-3.11 (m, 1H), 2.82-2.78 (m, 1H), 1.88-0.96 (m, 28H).
³¹P NMR (121 MHz, CD₂Cl₂): δ -17.2.

### (Example 11) Synthesis of di-tert-butyl(3-phenylbicyclo[2.2.1]hepta-2,5-dien-2-yl)pho sphine oxide (Structural Formula (20)) (Reaction Equation 12)

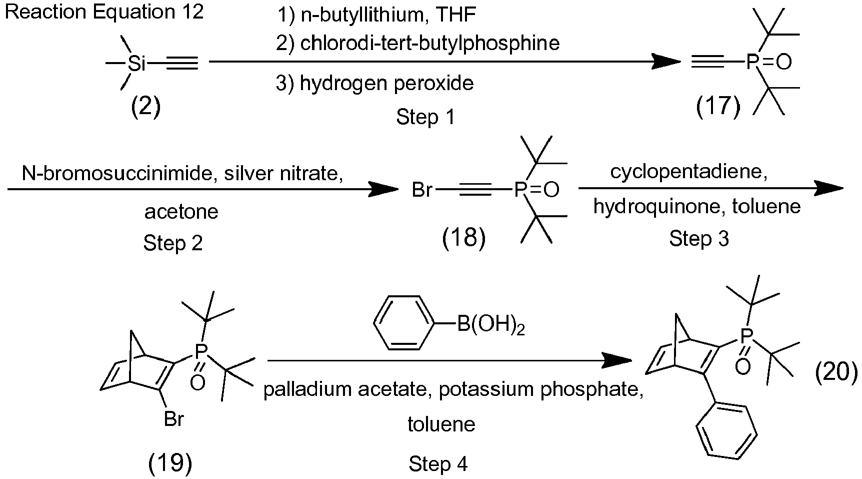

### Step 1: Synthesis of di-tert-butyl(ethynyl)phosphine oxide (Structural Formula (17))

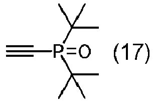

A 500 mL 4-necked reaction flask equipped with a three-way stopcock, a Teflon^{®} coated magnetic stirring bar, and a thermometer was evacuated and the inside of the flask was purged with nitrogen. To this flask, trimethylsilylacetylene (2) (6.19 g, 63.0 mmol, 1.05 equivalents) and THF (135 mL) were successively charged under nitrogen stream. The flask was cooled to 5°C with an ice water bath. Into the dropping funnel, n-butyllithium in a n-hexane solution (37.5 mL, 1.60mol/L, 60.0 mmol, 1.0 equivalents) was charged, and added dropwise to the solution in the flask over 30 minutes. Then, the mixture was stirred at 5°C for 2 hours. Subsequently, chlorodi-tert-butylphosphine (11.4 mL, 60.0 mmol, 1.0 equivalents) was charged into the dropping funnel, and added dropwise to the reaction solution over 15 minutes. After that, the ice water bath was removed, and the temperature was raised to room temperature. The mixture was further stirred for 30 minutes. After the reaction solution was concentrated under reduced pressure, toluene (120 mL) was added to the obtained residue, and the mixture was cooled to 15°C with a water bath. Then, 5% hydrogen peroxide (120 mL) was charged into the dropping funnel, and added dropwise to the reaction solution at such a speed that the internal temperature never exceeded 30°C. Subsequently, the mixture was further stirred at room temperature for 90 minutes. The aqueous layer was separated from the reaction solution. The aqueous layer was extracted with chloroform. The organic layers were combined and washed with water, and then concentrated under reduced pressure to dryness. Thus, 11.6 g of a crude product of the title compound (17) was obtained as a pale yellow solid.
¹H NMR (300 MHz, CDCl₃): δ 2.97 (d, J=8.1 Hz, 1H), 1.32 (d, J=15. 0 Hz, 18H).
³¹P NMR (121 MHz, CDCl₃): δ 50.4.

### Step 2: Synthesis of (bromoethynyl)di-tert-butylphosphine oxide (Structural Formula (18))

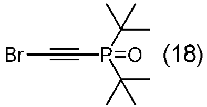

A 500 mL 4-necked reaction flask equipped with a three-way stopcock, a Teflon^{®} coated magnetic stirring bar, and a thermometer was evacuated and the inside of the flask was purged with nitrogen. To this flask, the crude product of di-tert-butyl(ethynyl)phosphine oxide (17) obtained in Step 1 (11.6 g), acetone (240 mL), N-bromosuccinimide (11.74 g, 66.0 mmol, 1.1 equivalents relative to chlorodi-tert-butylphosphine), and silver nitrate (0.306 g, 1.80 mmol, 3.0 mol% relative to chlorodi-tert-butylphosphine) were successively charged under nitrogen stream, and the reaction mixture was stirred at room temperature for 2 hours. The reaction solution was concentrated under reduced pressure, and toluene (150 mL) was added to the residue, followed by suction-filtering using Celite 545. The filtrate was concentrated under reduced pressure, and chloroform (120 mL) was added to the residue. After washed with water, the organic layer was concentrated under reduced pressure. Heptane (100 mL) was added to the residue, and a powder was filtered from the obtained suspension by suction filtering, and further dried under reduced pressure. Thus, 9.65 g of the title compound (18) was obtained as a colorless powder. Isolated yield: 60.7% (based on chlorodi-tert-butylphosphine).
¹H NMR (300 MHz, CDCl₃): δ 1.32 (d, J=15.0 Hz, 18H).
³¹P NMR (121 MHz, CDCl₃): δ 50.1.

### Step 3: Synthesis of (3-bromobicyclo[2.2.1]hepta-2,5-dien-2-yl)di-tert-butylphos phine oxide (Structural Formula (19))

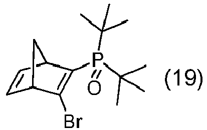

To a 100 mL autoclave equipped with a Teflon^{®} coated stirring bar, (bromoethynyl)di-tert-butylphosphine oxide (18) (4.98 g, 18.8 mmol, 1.0 equivalents) and hydroquinone (0.030 g, 0.27 mmol, 1.4 mol%) were charged therein, and the inside of the autoclave was purged with nitrogen. Then, cyclopentadiene (6.7 mL, 79.7 mmol, 4.2 equivalents) and toluene (7 mL) were added thereto under nitrogen stream. Subsequently, the instrument was heated, and the mixture was stirred at 80°C for 23 hours. After cooled to room temperature, the reaction solution was directly purified by silica gel column chromatography (eluent: ethyl acetate). Thus, 5.07 g of the title compound (19) was obtained as a pale yellow solid. Isolated yield: 81.4%.
¹H NMR (300 MHz, CD₃OD): δ 7.00-6.90 (m, 2H), 4.25-4.14 (m, 1H), 3.80-3.68 (m, 1H), 2.40-2.33 (m, 1H), 2.18-2.01 (m, 1H), 1.48-1.10 (m, 18H).
³¹P NMR (121 MHz, CD₃OD): δ 58.5.

### Step 4: Synthesis of di-tert-butyl(3-phenylbicyclo[2.2.1]hepta-2,5-dien-2-yl)pho sphine oxide (Structural Formula (20))

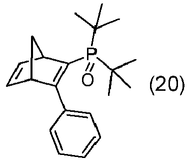

To a 20 mL Schlenk tube, (3-bromobicyclo[2.2.1]hepta-2,5-dien-2-yl)di-tert-butylphos phine oxide (19) (0.156 g, 0.47 mmol, 1.0 equivalents), phenylboronic acid (0.067 g, 0.55 mmol, 1.2 equivalents), potassium phosphate (0.127 g, 0.60 mmol, 1. 3 equivalents), and palladium acetate (0.0011 g, 0.005 mmol, 1.1 mol%) were successively charged. Then, a Teflon^{®} coated stirring bar, a three-way stopcock, and a condenser were attached to the Schlenk tube, and the inside thereof was purged with nitrogen. After toluene (1 mL) was added to the Schlenk tube under nitrogen stream, the tube was heated with an oil bath, and the mixture was stirred at 100°C for 2 hours. The reaction solution was cooled to room temperature, and chloroform and water were added thereto and stirred. Thereafter, the aqueous layer was separated. The organic layer was concentrated under reduced pressure, and the obtained residue was purified by silica gel column chromatography (eluent: ethyl acetate). Thus, 0.066 g of the title compound (20) was obtained as a colorless solid. Isolated yield: 42.8%.
¹H NMR (300 MHz, CD₃OD): δ 7.30-7.21 (m, 5H), 7.04 (dd, J=5.1, 3.0 Hz, 1H), 6.96 (dd, J=4.5, 3.0 Hz, 1H), 4.16-4.12 (m, 1H), 3.71-3.69 (m, 1H), 2.40-2.33 (m, 1H), 2.08-2.03 (m, 1H), 1.33 (d, J=13.5 Hz, 9H), 1.21 (d, J=13.8 Hz, 9H).
³¹P NMR (121 MHz, CD₃OD): δ 57.6.

### (Example 12) Synthesis of diphenyl(3-phenylbicyclo[2.2.1]hepta-2,5-dien-2-yl)phosphin e oxide (Structural Formula (24)) (Reaction Equation 13)

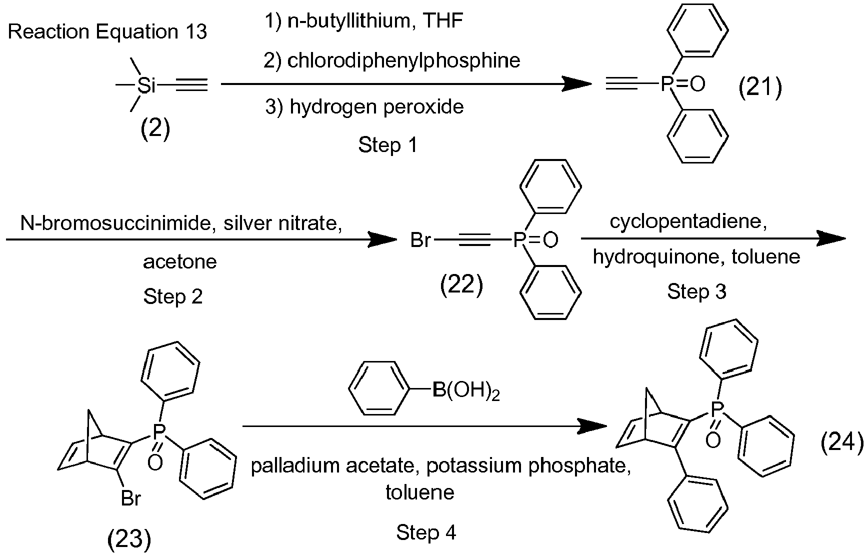

### Step 1: Synthesis of diphenyl(ethynyl)phosphine oxide (Structural Formula (21))

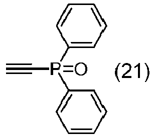

A 500 mL 4-necked reaction flask equipped with a three-way stopcock, a Teflon^{®} coated magnetic stirring bar, and a thermometer was evacuated and the inside of the flask was purged with nitrogen. To this flask, trimethylsilylacetylene (2) (6.19 g, 63.0 mmol, 1.05 equivalents) and THF (120 mL) were successively charged under nitrogen stream. The flask was cooled to 5°C with an ice water bath. Into the dropping funnel, n-butyllithium in a n-hexane solution (37.5 mL, 1.60mol/L, 60.0 mmol, 1.0 equivalents) was charged, and added dropwise to the solution in the flask over 10 minutes. Then, the mixture was stirred at 5°C for 30 minutes. Subsequently, chlorodiphenylphosphine (11.1 mL, 60.0 mmol, 1.0 equivalents) and THF (11 mL) were charged into the dropping funnel, and added dropwise to the reaction solution over 5 minutes. After that, the ice water bath was removed, and the temperature was raised to room temperature. The mixture was further stirred for 90 minutes. After the reaction solution was concentrated under reduced pressure, toluene (120 mL) was added to the obtained residue, and the mixture was cooled to 15°C with a water bath. Then, 10% hydrogen peroxide (60 mL) was charged into the dropping funnel, and added dropwise to the reaction solution at such a speed that the internal temperature never exceeded 30°C. Subsequently, the mixture was further stirred at room temperature for 90 minutes. The aqueous layer was separated from the reaction solution. Further, the aqueous layer was extracted with toluene. The organic layers were combined and washed with water, and then concentrated under reduced pressure. Thus, 14.8 g of a crude product of the title compound (21) was obtained as a brown amorphous solid.
¹H NMR (300 MHz, CDCl₃): δ 7.89-7.42 (m, 10H), 3.32 (d, J=9.6 Hz, 1H).
³¹P NMR (121 MHz, CDCl₃): δ 9.4.

### Step 2: Synthesis of (bromoethynyl)diphenylphosphine oxide (Structural Formula (22))

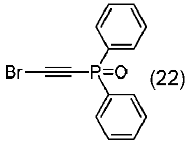

A 500 mL 4-necked reaction flask equipped with a three-way stopcock, a Teflon^{®} coated magnetic stirring bar, and a thermometer was evacuated and the inside of the flask was purged with nitrogen. To this flask, the crude product (14.8 g) of diphenyl (ethynyl)phosphine oxide (21) obtained in Step 1 in an acetone (240 mL) solution, N-bromosuccinimide (11.74 g, 66.0 mmol, 1.1 equivalents relative to chlorodiphenylphosphine), and silver nitrate (0.204 g, 1.2 mmol, 2.0 mol% relative to chlorodiphenylphosphine) were successively charged, and the reaction mixture was stirred at room temperature for 2 hours. The reaction solution was concentrated under reduced pressure, and toluene (150 mL) was added to the residue, followed by suction-filtering using Celite 545. The filtrate was concentrated under reduced pressure, and chloroform (120 mL) was added to the residue. After washed with water, the organic layer was concentrated under reduced pressure. The residue was purified by silica gel column chromatography (eluent: ethyl acetate). Thus, 15.0 g of the title compound (22) was obtained as a brown amorphous solid. Isolated yield: 81.9% (based on chlorodiphenylphosphine).
¹H NMR (300 MHz, CDCl₃): δ 7.86-7.78 (m, 4H), 7.59-7.44 (m, 6H). ³¹P NMR (121 MHz, CDCl₃): δ 8.9.

### Step 3: Synthesis of (3-bromobicyclo[2.2.1]hepta-2,5-dien-2-yl)diphenylphosphine oxide (Structural Formula (23))

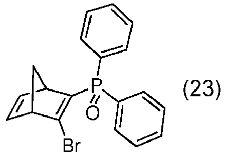

To a 100 mL autoclave equipped with a Teflon^{®} coated stirring bar, hydroquinone (0.075 g, 1.5 mol%) was charged therein, and the inside of the autoclave was purged with nitrogen. Then, cyclopentadiene (15.5 mL, 183.6 mmol, 4.0 equivalents) and (bromoethynyl)diphenylphosphine oxide (22) (14.0 g, 45.9 mmol, 1.0 equivalents) in a toluene (15 mL) solution were added thereto under nitrogen stream. Subsequently, the instrument was heated, and the mixture was stirred at 90°C for 22 hours. After cooled to room temperature, the reaction solution was directly purified by silica gel column chromatography (eluent: ethyl acetate). Thus, 15.0 g of the title compound (23) was obtained as a brown amorphous solid. Isolated yield: 88.0%.
¹H NMR (300 MHz, CDCl₃): δ 7.69-7.41 (m, 10H), 6.87-6.83 (m, 1H), 6.76 (dd, J=5.1, 3.0 Hz, 1H), 3.98-3.95 (m, 1H), 3.78-3.73 (m, 1H), 2.44-2.40 (m, 1H), 2.09-2.05 (m, 1H).
³¹P NMR (121 MHz, CDCl₃): δ 23.7.

### Step 4: Synthesis of diphenyl(3-phenylbicyclo[2.2.1]hepta-2,5-dien-2-yl)phosphin e oxide (Structural Formula (24))

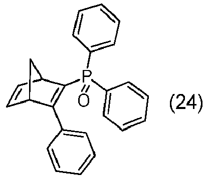

A 50 mL 4-necked reaction flask equipped with a three-way stopcock, a Teflon^{®} coated magnetic stirring bar, and a thermometer was evacuated and the inside of the flask was purged with nitrogen. To this flask, (3-bromobicyclo[2.2.1]hepta-2,5-dien-2-yl)diphenylphosphine oxide (23) (3.71 g, 10.0 mmol, 1.0 equivalents) in a toluene (20 mL) solution, phenylboronic acid (2.44 g, 20.0 mmol, 2.0 equivalents), potassium phosphate (6.37 g, 30.0 mmol, 3.0 equivalents), and palladium acetate (0.112 g, 0.5 mmol, 5.0 mol%) were successively charged. Then, the flask was heated with an oil bath, and the mixture was stirred at 100°C for 16 hours. The reaction solution was cooled to room temperature, and toluene and water were added thereto and stirred. Thereafter, the aqueous layer was separated. The organic layer was concentrated under reduced pressure, and the obtained residue was purified by silica gel column chromatography (eluent: ethyl acetate). Thus, 0.90 g of the title compound (24) was obtained as a brown amorphous solid. Isolated yield: 24.4%.
¹H NMR (300 MHz, CDCl₃): δ 7.67-7.58 (m, 2H), 7.50-7.38 (m, 5H), 7.34-7.28 (m, 3H), 7.23-7.15 (m, 2H), 7.08-7.02 (m, 3H), 6.99 (dd, J=4.8, 3.0 Hz, 1H), 6.71 (dd, J=5.1, 3.0 Hz, 1H), 3.99-3.97 (m, 1H), 3.66-3.62 (m, 1H), 2.40-2.35 (m, 1H), 2.20-1.98 (m, 1H).
³¹P NMR (121 MHz, CDCl₃): δ 22.1.

### (Example 13) Synthesis of diphenyl(3-phenylbicyclo[2.2.1]hepta-2,5-dien-2-yl)phosphin e (Structural Formula (25)) (Reaction Equation 14)

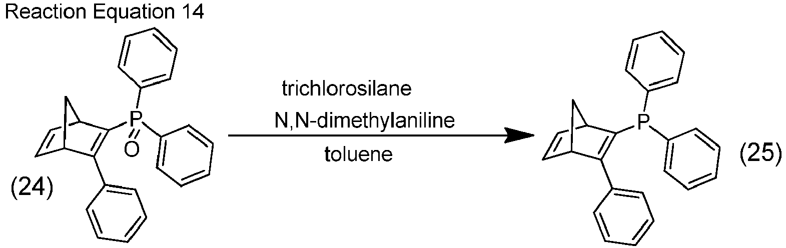

To a 100 mL 4-necked reaction flask equipped with a three-way stopcock, a Teflon^{®} coated magnetic stirring bar, a condenser, and a thermometer, diphenyl(3-phenylbicyclo[2.2.1]hepta-2,5-dien-2-yl)phosphin e oxide (24) (0.88 g, 2.4 mmol, 1.0 equivalents) in a toluene solution (24 mL) and N,N-dimethylaniline (3.1 mL, 24.0 mmol, 10.0 equivalents) were successively charged. After the solution was degassed under reduced pressure, the flask was purged with nitrogen and further cooled to 5°C with an ice water bath. Then, using a syringe, trichlorosilane (1.2 mL, 12.0 mmol, 5.0 equivalents) was added dropwise to the solution at such a speed that the internal temperature never exceeded 10°C. Subsequently, the temperature was raised gradually over 5 hours to 80°C with an oil bath. The reaction solution was cooled to 5°C with an ice water bath. A dropping funnel was attached to the reaction flask, and an aqueous solution of sodium hydroxide (15.0 mL, 4.0 mol/L, 60.0 mmol, 25.0 equivalents) was charged therein and added dropwise to the solution at such a speed that the internal temperature never exceeded 30°C. The reaction solution was heated with an oil bath, stirred at 60°C for 30 minutes, and cooled to room temperature. Thereafter, the aqueous layer was separated. The organic layer was washed with water and 1 N hydrochloric acid, dried over sodium sulfate, and then concentrated under reduced pressure. After purified by silica gel column chromatography (eluent: toluene), the obtained residue was further re-crystallized from toluene/methanol. Thus, 0.70 g of the title compound (25) was obtained as a colorless crystal. Isolated yield: 82.8%. ¹H NMR (300 MHz, CD₂ Cl₂): δ 7.55-7.12 (m, 15H), 6.79 (dd, J=5.1, 3.0 Hz, 1H), 6.31 (dd, J=4.8, 3.0 Hz, 1H), 4.01-3.96 (m, 1H), 3.50-3.46 (m, 1H), 2.37-2.20 (m, 1H), 1.96-1.92 (m, 1H). ³¹P NMR (121 MHz, CD₂Cl₂): δ -22.7.

### (Example 14) Synthesis of dicyclohexyl(3-phenylbicyclo[2.2.1]hepta-2,5-dien-2-yl)phos phine(π-allyl)palladium chloride (Structural Formula (26)) (Reaction Equation 15)

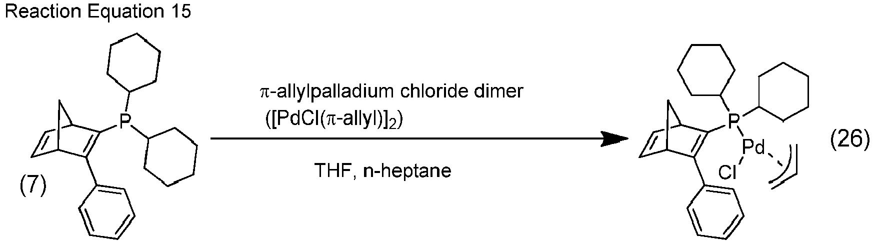

To a 20 mL Schlenk tube equipped with a Teflon a Teflon^{®} coated magnetic stirring bar, dicyclohexyl(3-phenylbicyclo[2.2.1]hepta-2,5-dien-2-yl)phos phine (7) (0.2 g, 0.55 mmol, 2.2 equivalents) and π-allylpalladium chloride dimer ([PdCl(π-allyl)]₂) (0.088 g, 0.25 mmol, 1.0 equivalents) were charged, and the inside of the tube was purged with nitrogen. Then, THF (1 mL) was added thereto under nitrogen stream, and the mixture was stirred at room temperature for 1 hour. Subsequently, n-heptane (10 mL) was added to the reaction solution. The reaction mixture was cooled to 5°C with an ice water bath, and further stirred for 2 hours. A crystal was collected from the obtained suspension by suction filtering, and then dried under reduced pressure. Thus, 0.23 g of the title compound (26) was obtained in the form of a yellow powder. Isolated yield: 84.0% (note: as a coordination isomer mixture).
³¹P NMR (121 MHz, CD₂Cl₂): δ 13.4, 13.2.

### (Example 15) Synthesis of bicyclo[2.2.1]hepta-2,5-dien-2-yldiphenylphosphine-monomeri c borane complex (Structural Formula (28)) (Reaction Equation 16)

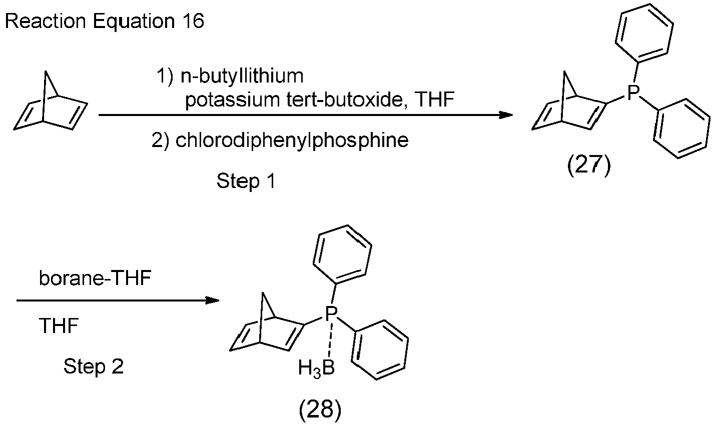

### Step 1: Synthesis of bicyclo[2.2.1]hepta-2,5-dien-2-yldiphenylphosphine (Structural Formula (27))

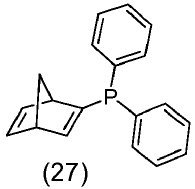

To a 100 mL 4-necked reaction flask equipped with a three-way stopcock, a Teflon a Teflon^{®} coated magnetic stirring bar, a dropping funnel, and a thermometer, potassium tert-butoxide (1.97 g, 17.6mmol, 1.2 equivalents), THF (32 mL), and norbornadiene (3.3 mL, 32.0 mmol, 2.1 equivalents) were charged. After the solution was degassed under reduced pressure, the inside of the flask was purged with nitrogen, and further cooled to -60°C with a dry ice-acetone bath. Into the dropping funnel, n-butyllithium in a n-hexane solution (10.0 mL, 1.60 mol/L, 16.0 mmol, 1.1 equivalents) was charged, and added dropwise to the solution in the flask at such a speed that the internal temperature never exceeded -55°C. Then, the mixture was stirred at -60°C for 30 minutes. Subsequently, chlorodiphenylphosphine (2.8 mL, 15.0 mmol, 1.0 equivalents) was charged into the dropping funnel, and added dropwise to the reaction solution over 6 minutes. After that, the mixture was stirred at -60°C for 20 minutes. Then, an aqueous solution of ammonium chloride (16 mL, 2.0 mol/L, 32.0 mmol, 2.1 equivalents) was charged into the dropping funnel, and added dropwise to the reaction solution at -60°C over 5 minutes. Subsequently, the dry ice-acetone bath was removed, and the flask was left standing until the temperature reached room temperature. The aqueous layer was separated. Further, the aqueous layer was extracted with toluene. These organic layers were combined and concentrated under reduced pressure. Toluene (40 mL) was added thereto, and the resultant was washed with water. Then, after drying over sodium sulfate, decoloration was performed using silica gel (2.5 g), followed by concentrating under reduced pressure. Thus, 3.40 g of a crude product of the title compound (27) was obtained as a brown amorphous solid.
¹H NMR (300 MHz, CDCl₃): δ 7.52-7.40 (m, 4H), 7.15-7.00 (m, 6H), 6.68-6.64 (m, 1H), 6.59 (dd, J=4.8, 3.0Hz, 1H), 6.48 (dd, J=5.1, 3.0 Hz, 1H), 3.49-3.46 (m, 1H), 3.36-3.32 (m, 1H), 2.04-2.00 (m, 1H), 1.90-1.86 (m, 1H).
³¹P NMR (121 MHz, CDCl₃): δ -14.9.

### Step 2: Synthesis of bicyclo[2.2.1]hepta-2,5-dien-2-yldiphenylphosphine-monomeri c borane complex (Structural Formula (28))

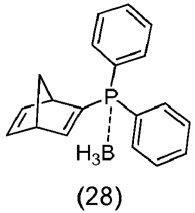

A 100 mL 4-necked reaction flask equipped with a three-way stopcock, a Teflon^{®} coated magnetic stirring bar, and a thermometer was evacuated and the inside of the flask was purged with nitrogen. To this flask, the crude product of bicyclo[2.2.1]hepta-2,5-dien-2-yldiphenylphosphine (27) (3.40 g) obtained in Step 1 of a THF (24 mL) solution were charged. The flask was cooled to 5°C with an ice bath. Into the dropping funnel, a borane-THF complex in a THF solution (13.5 mL, 1.0 mol/L, 13.5 mmol, 0.9 equivalents relative to chlorodiphenylphosphine) was charged, and added dropwise to the solution over 20 minutes. Then, the mixture was stirred at 5°C for 40 minutes. Subsequently, the ice bath was removed, and the mixture was stirred at room temperature for 30 minutes. The reaction solution was cooled to 5°C, and then methanol (5 mL) was added dropwise thereto using a syringe, and the mixture was stirred at room temperature. After the foaming was ceased, the reaction solution was concentrated under reduced pressure. The obtained residue was purified by silica gel column chromatography (eluents:toluene/hexane=2/1). Thus, 1.85 g of the title compound (28) was obtained as a colorless amorphous solid. Isolated yield: 42.5% (based on chlorodiphenylphosphine).
¹H NMR (300 MHz, CDCl₃): δ 7.70-7.56 (m, 4H), 7.05-6.96 (m, 6H), 6.95-6.90 (m, 1H), 6.59 (dd, J=5.7, 3.0 Hz, 1H), 6.35 (dd, J=5.1, 3.0 Hz, 1H), 3.68-3.64 (m, 1H), 3.23-3.19 (m, 1H), 2.60--1.40 (m, 5H).
³¹P NMR (121 MHz, CDCl₃): δ 15.0-13.0.

### (Example 16) Synthesis of bicyclo[2.2.1]hepta-2,5-dien-2-yldicyclohexylphosphine-mono meric borane complex (Structural Formula (30)) (Reaction Equation 17)

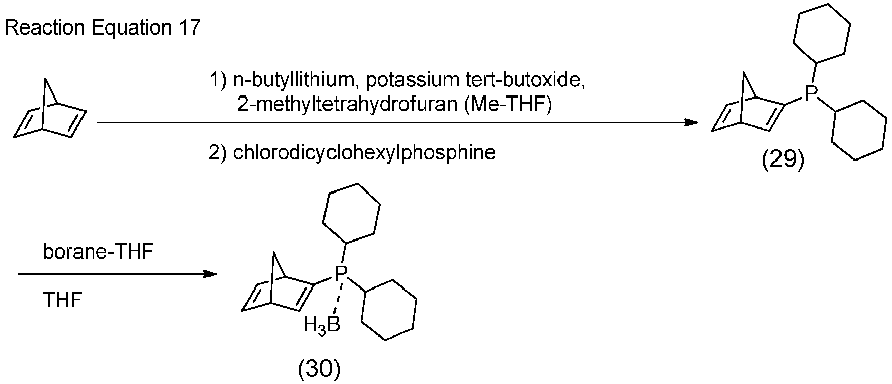

To a 300 mL 4-necked reaction flask equipped with a three-way stopcock, a Teflon^{®} coated magnetic stirring bar, a dropping funnel, and a thermometer, potassium tert-butoxide (3.69 g, 32.9mmol, 1.53 equivalents), 2-methyltetrahydrofuran (Me-THF) (129 mL), and norbornadiene (6.6 mL, 64.5 mmol, 3.0 equivalents) were charged. After the solution was degassed under reduced pressure, the inside of the flask was purged with nitrogen, and further cooled to -60°C with a dry ice-acetone bath. Into the dropping funnel, n-butyllithium in a n-hexane solution (20.2 mL, 1.60 mol/L, 32.3 mmol, 1.5 equivalents) was charged, and added dropwise to the solution in the flask at such a speed that the internal temperature never exceeded -55°C. Then, the mixture was stirred at -60°C for 30 minutes. Subsequently, chlorodicyclohexylphosphine (5.0 g, 21.5 mmol, 1.0 equivalents) in a Me-THF (5.0 mL) solution was charged into the dropping funnel, and added dropwise to the reaction solution over 15 minutes. After that, the mixture was stirred at -60°C for 20 minutes. Then, water (40 mL) was charged into the dropping funnel, and added dropwise to the reaction solution at such a speed that the temperature never exceeded -30°C. Subsequently, the dry ice-acetone bath was removed, and the temperature was raised to room temperature. The aqueous layer was separated. Further, after washed with water, the organic layer was dried over sodium sulfate. Thus, a Me-THF/n-hexane solution of a crude product of bicyclo[2.2.1]hepta-2,5-dien-2-yldicyclohexylphosphine (29) was obtained. Next, to a 300 mL 4-necked reaction flask equipped with a three-way stopcock, a Teflon^{®} coated magnetic stirring bar, a dropping funnel, and a thermometer, the crude bicyclo[2.2.1]hepta-2,5-dien-2-yldicyclohexylphosphine (29) in the Me-THF/n-hexane solution was charged therein. The solution was cooled to 5°C with an ice bath. Into the dropping funnel, a borane-THF complex in a THF solution (30.0 mL, 1.0 mol/L, 30.0 mmol, 1.4 equivalents) was charged, and added dropwise to the solution over 25 minutes. Subsequently, the mixture was stirred at 5°C for 30 minutes. Methanol (30 mL) was added dropwise to the reaction solution at 5°C using a syringe. After that, the mixture was stirred at room temperature. After the foaming was ceased, the reaction solution was concentrated under reduced pressure. Toluene (100 mL) was added to the obtained residue, and the solution was washed with water, and then dried over sodium sulfate. The organic layer was concentrated under reduced pressure, and the obtained residue was re-crystallized from toluene/methanol. Thus, 3.04 g of the title compound (30) was obtained as a white crystal. Isolated yield: 47.0%.
¹H NMR (300 MHz, CDCl₃): δ 7.52-7.47 (m, 1H), 6.78-6.69 (m, 2H), 3.79-3.75 (m, 1H), 3.74-3.70 (m, 1H), 2.06-2.03 (m, 2H), 1.97-1.52 (m, 12H), 1.40-1.00 (m, 10H), 0.90--0.20 (m, 3H). ³¹P NMR (121 MHz, CDCl₃): δ 19.3-17.2.

### (Example 17) Synthesis of dicyclohexyl(3-phenylbicyclo[2.2.1]hepta-2,5-dien-2-yl)phos phine-monomeric borane complex (Structural Formula (31)) (Reaction Equation 18)

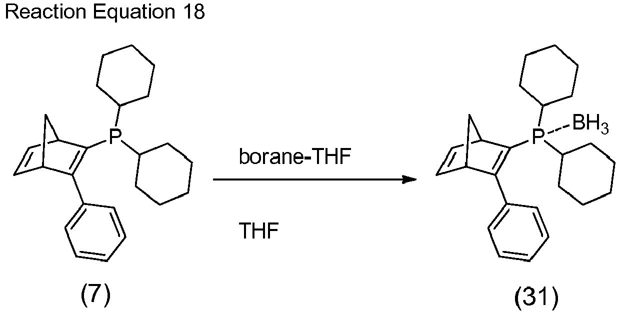

To a 50 mL 4-necked reaction flask equipped with a three-way stopcock, a Teflon^{®} coated magnetic stirring bar, and a thermometer, dicyclohexyl(3-phenylbicyclo[2.2.1]hepta-2,5-dien-2-yl)phos phine (7) (0.41 g, 1.1 mmol, 1.0 equivalents) and THF (5.6 mL) were charged. After the solution was degassed under reduced pressure, the inside of the flask was purged with nitrogen, and further cooled to 5°C with an ice bath. A borane-THF complex in a THF solution (1.4 mL, 1.0 mol/L, 1.4 mmol, 1.3 equivalents) was added to the solution using a syringe. Then, the mixture was stirred at 5°C for 90 minutes. Methanol (1.4 mL) was added dropwise to the reaction solution using a syringe. Subsequently, the mixture was stirred at room temperature. After the foaming was ceased, the solution was concentrated under reduced pressure. Toluene (50 mL) was added to the obtained residue, and the solution was washed with water, and then dried over sodium sulfate. The organic layer was concentrated under reduced pressure, and the obtained residue was purified by silica gel column chromatography (eluents: n-hexane/ethyl acetate=40/1). Thus, 0.36 g of the title compound (31) was obtained as a white solid. Isolated yield: 83.8%.
¹H NMR (300 MHz, CDCl₃): δ 7.38-7.28 (m, 3H), 7. 15-7. 11 (m, 2H), 6.94 (dd, J=5.1, 3.0Hz, 1H), 6.87 (dd, J=5.1, 3.0 Hz, 1H), 4.08-4.04 (m, 1H), 3.70-3.66 (m, 1H), 2.22-2.18 (m, 1H), 1.96--0.20 (m, 26H).
³¹P NMR (121 MHz, CDCl₃): δ 23.1-21.0.

### (Example 18) Synthesis of dicyclohexyl(3-(2-methoxyphenyl)bicyclo[2.2.1]hepta-2,5-die n-2-yl) phosphine-monomeric borane complex (Structural Formula (32)) (Reaction Equation 19)

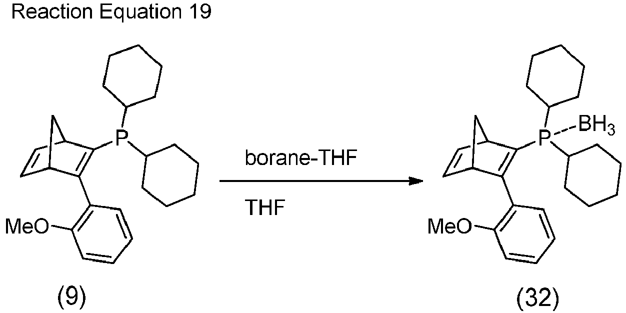

To a 30 mL 2-necked reaction flask equipped with a three-way stopcock and a Teflon^{®} coated magnetic stirring bar, dicyclohexyl(3-(2-methoxyphenyl)bicyclo[2.2.1]hepta-2,5-die n-2-yl)phosphine (9) (0.20 g, 0.50 mmol, 1.0 equivalents) and THF (5.0 mL) were charged. After the solution was degassed under reduced pressure, the inside of the flask was purged with nitrogen, and further cooled to 5°C with an ice bath. A borane-THF complex in a THF solution (0.75 mL, 1.0 mol/L, 0.75 mmol, 1.5 equivalents) was added to the solution using a syringe. Then, the mixture was stirred at 5°C for 60 minutes. Methanol (5.0 mL) was added dropwise to the reaction solution using a syringe. Subsequently, the mixture was stirred at room temperature. After the foaming was ceased, the solution was concentrated under reduced pressure. The obtained residue was purified by silica gel column chromatography (eluents: n-hexane/toluene=1/1). Thus, 0.12 g of the title compound (32) was obtained as a white solid. Isolated yield: 60.8%. ¹H NMR (300 MHz, CDCl₃): δ 7.32-7.21 (m, 1H), 7.00-6.76 (m, 5H), 4.02-3.98 (m, 1H), 3.76 (s, 3H), 3.65-3.61 (m, 1H), 2.25-2.16 (m, 1H), 1.95-1.90 (m, 1H), 1.88--0.40 (m, 25H).
³¹P NMR (121 MHz, CDCl₃): δ 23.0-20.2.

Hereinafter, the synthesis of optically active substances of the present invention will be described in detail based on Examples. Nevertheless, the present invention is not limited to these Examples at all. The results of the ¹H NMR spectra and ³¹P NMR spectra of the optically active substances exhibited are the same as those of the phosphorous compounds before optical resolution. Note that, in Examples, the following apparatus was used for the measurement of physical properties.

### Specific rotation: P-1020 polarimeter (manufactured by JASCO Corporation)

### (Example 19) Synthesis of (+)-dicyclohexyl(3-phenylbicyclo[2.2.1]hept-2-en-2-yl)phosp hine (Structural Formula (+)-(12)) (Reaction Equation 20)

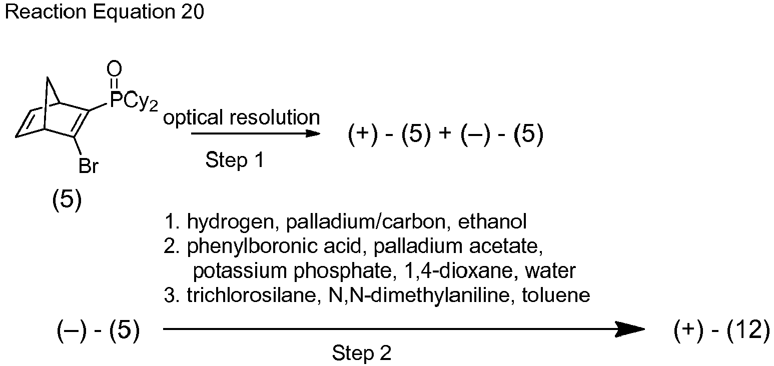

### Step 1: Optical resolution of (3-bromobicyclo[2.2.1]hepta-2,5-dien-2-yl)dicyclohexylphosp hine oxide (Structural Formula (5))

(3-bromobicyclo[2.2.1]hepta-2,5-dien-2-yl)dicyclohexy lphosphine oxide (5) (1.0 g) was dissolved in a solution (20 mL) of ethyl acetate/2-propanol (90/10) to prepare a (3-bromobicyclo[2.2.1]hepta-2,5-dien-2-yl)dicyclohexylphosp hine oxide solution. The solution was subjected to optical resolution high-performance liquid chromatography (HPLC) under the following conditions. Thereby, (-)-(3-bromobicyclo[2.2.1]hepta-2,5-dien-2-yl)dicyclohexylp hosphine oxide ((-)-(5)) of the earlier peak and (+)-(3-bromobicyclo[2.2.1]hepta-2,5-dien-2-yl)dicyclohexylp hosphine oxide ((+)-(5)) of the later peak were collected and evaporated to dryness under reduced pressure. Thus, optically pure (-)-(5) and (+)-(5) were obtained in amounts of 0.26 g and 0.38 g, respectively.

### Optical resolution HPLC conditions

Column: CHIRALPAK IA (manufactured by Daicel Chemical Industries, Ltd.) 4.6 × 250 mm
Column temperature: 10°C
Mobile phase: ethyl acetate/2-propanol (90/10) Flow rate: 1.0 mL/min
Detection: UV 254 nm
Amount of sample injected: 95 µL
Note that the retention time in the optical resolution HPLC of (-)-(5) was 7.7 minutes, and that of (+)-(5) was 9.9 minutes. (-)-(5)
Specific rotation: [α]_{D}²⁰=-0.1° (c=0.43, chloroform, 99% ee) (+)-(5)
Specific rotation: [α]_{D}²⁰=+0.1° (c=0.31, chloroform, 99% ee)

### Step 2: Synthesis of (+)-dicyclohexyl(3-phenylbicyclo[2.2.1]hept-2-en-2-yl)phosp hine (Structural Formula (+)-(12))

To a 50 mL 4-necked reaction flask equipped with a three-way stopcock, a Teflon^{®} coated magnetic stirring bar, and a thermometer, (-)-(5) (0.24 g, 0.65 mmol, 1.0 equivalents) and ethanol (6.5 mL) were successively charged. After degassed under reduced pressure, the flask was purged with nitrogen. Under nitrogen stream, 5% palladium/carbon (1.2 mg, 0.5 weight % relative to the weight of (-)-(5)) were added to the solution. After degassing under reduced pressure, the flask was purged with hydrogen using a rubber balloon. After stirred at 30°C and normal pressure under the hydrogen atmosphere for 2 hours, the reaction solution was suction-filtered using Celite 545, and the filtrate was concentrated under reduced pressure. Thus, 0.23 g of a crude product of an optically active substance of (3-bromobicyclo[2.2.1]hept-2-en-2-yl)dicyclohexylphosphine oxide (10) was obtained as a colorless solid. Next, a 30 mL 2-necked reaction flask equipped with a three-way stopcock and a Teflon^{®} coated magnetic stirring bar, and condenser was evacuated and the inside of the flask was purged with nitrogen. To this flask, the obtained crude product (0.22 g) of the optically active substance of (3-bromobicyclo[2.2.1]hept-2-en-2-yl)dicyclohexylphosphine oxide (10), 1,4-dioxane (1.2 mL), water (1.2 mL), phenylboronic acid (0.10 g, 0.86 mmol, 1.3 equivalents relative to (-)-(5)), potassium phosphate (0.24 g, 1.1 mmol, 1. 7 equivalents relative to (-)-(5)), and palladium acetate (2.6mg, 0.011 mmol, 1.7mol% relative to (-)-(5)) were successively charged under nitrogen stream. Then, the flask was heated with an oil bath, and the mixture was stirred at 80°C for 2 hours. The reaction solution was cooled to room temperature, and toluene was added thereto and stirred. Subsequently, the aqueous layer was separated. After dried over sodium sulfate, the organic layer was concentrated under reduced pressure. Thus, 0.25 g of a crude product of an optically active substance of dicyclohexyl(3-phenylbicyclo[2.2.1]hept-2-en-2-yl)phosphine oxide (11) was obtained as a colorless solid. Next, to a 50 mL 4-necked reaction flask equipped with a three-way stopcock, a Teflon^{®} coated magnetic stirring bar, a condenser, and a thermometer, the crude product (0.25 g) of the optically active substance of dicyclohexyl(3-phenylbicyclo[2.2.1]hept-2-en-2-yl)phosphine oxide (11), toluene (5.7mL), and N,N-dimethylaniline (0.73mL, 5.6 mmol, 8.6 equivalents relative to (-)-(5)) were successively charged. After the solution was degassed under reduced pressure, the flask was purged with nitrogen and further cooled to 5°C with an ice water bath. Then, using a syringe, trichlorosilane (0.29 mL, 2.9 mmol, 4.5 equivalents relative to (-)-(5)) was added dropwise to the solution at such a speed that the internal temperature never exceeded 10°C. Subsequently, the temperature was raised gradually over 4 hours and 30 minutes to 80°C with an oil bath. The mixture was further stirred at 80°C for 10 minutes. The reaction solution was cooled to 5°C with an ice water bath. A dropping funnel was attached to the reaction flask, and an aqueous solution of sodium hydroxide (7.1 mL, 2.0 mol/L, 14.2 mmol, 21. 8 equivalents relative to (-)-(5)) was charged therein and added dropwise to the reaction solution at such a speed that the internal temperature never exceeded 30°C. The reaction solution was heated with an oil bath, stirred at 60°C for 2 hours, and cooled to room temperature. Thereafter, the aqueous layer was separated. The organic layer was washed with water and 1 N hydrochloric acid, dried over sodium sulfate, and then concentrated under reduced pressure. The obtained residue was purified by silica gel column chromatography (eluent: toluene) . Thus, 0.10 g of the title compound (+)-(12) was obtained as a pale yellow solid. Isolated yield: 41.5% (based on (-)-(5)). Specific rotation: [α]_{D}²⁰=+0.7° (c=0.56, chloroform)

### (Example 20) Synthesis of (-)-dicyclohexyl(3-(2,6-dimethoxyphenyl)bicyclo[2.2.1]hept-2-en-2-yl)phosphine (Structural Formula (-)-(16)) (Reaction Equation 21)

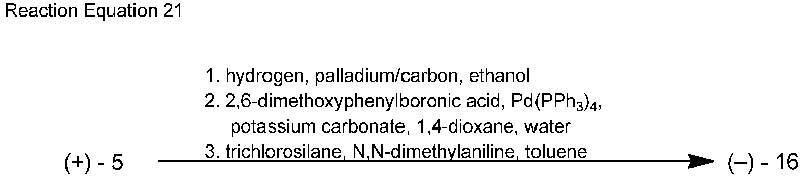

To a 50 mL 4-necked reaction flask equipped with a three-way stopcock, a Teflon^{®} coated magnetic stirring bar, and a thermometer, (+)-(5) (0.38 g, 1.0 mmol, 1.0 equivalents) and ethanol (10 mL) were successively charged. After degassed under reduced pressure, the flask was purged with nitrogen. Under nitrogen stream, 5% palladium/carbon (1.9 mg, 0.5 weight % relative to the weight of (+)-(5)) were added to the solution. After degassing under reduced pressure, the flask was purged with hydrogen using a rubber balloon. After stirred at 30°C and normal pressure under the hydrogen atmosphere for 2 hours, the reaction solution was suction-filtered using Celite 545, and the filtrate was concentrated under reduced pressure. The obtained residue was purified by silica gel column chromatography (eluents:ethyl acetate/methanol=20/1). Thus, 0.24 g of an optically active substance of (3-bromobicyclo[2.2.1]hept-2-en-2-yl)dicyclohexylphosphine oxide (10) was obtained as a colorless solid. A 30 mL 2-necked reaction flask equipped with a three-way stopcock and a Teflon^{®} coated magnetic stirring bar, and a condenser was evacuated and the inside of the flask was purged with nitrogen. To this flask, the optically active substance of (3-bromobicyclo[2.2.1]hept-2-en-2-yl)dicyclohexylphosphine oxide (10) (0.23 g, 0.60 mmol, 1.0 equivalents), 1,4-dioxane (2.5 mL), water (2.5 mL), 2, 6-dimethoxyphenylboronic acid (0.23 g, 1.2 mmol, 2.0 equivalents), potassium carbonate (0.34 g, 2.5 mmol, 4.2 equivalents), and tetrakis(triphenylphosphine)palladium(0) (0.036 g, 0.031 mmol, 5.2 mol%) were successively charged under nitrogen stream. While the flask was being heated with an oil bath, the mixture was stirred at 80°C for 2 hours. Then, 2,6-dimethoxyphenylboronic acid (0.23 g, 1.2 mmol, 2.0 equivalents) was added thereto under nitrogen stream, and further stirred at 80°C for 2 hours. The reaction solution was cooled to room temperature, and toluene was added thereto and stirred. Subsequently, the aqueous layer was separated. After dried over sodium sulfate, the organic layer was concentrated under reduced pressure. The obtained residue was purified by silica gel column chromatography (eluents: ethyl acetate/methanol=20/1). Thus, 0.12 g of an optically active substance of dicyclohexyl(3-(2,6-dimethoxyphenyl)bicyclo[2.2.1]hept-2-en -2-yl)phosphine oxide (15) was obtained as a colorless solid. Next, to a 50 mL 4-necked reaction flask equipped with a three-way stopcock, a Teflon^{®} coated magnetic stirring bar, a condenser, and a thermometer, the optically active substance of dicyclohexyl(3-(2,6-dimethoxyphenyl)bicyclo[2.2.1]hept-2-en -2-yl)phosphine oxide (15) (0.11 g, 0.25 mmol, 1.0 equivalents), toluene (10 mL), and N,N-dimethylaniline (0.32 mL, 2.5mol, 10 equivalents) were successively charged. After the solution was degassed under reduced pressure, the flask was purged with nitrogen and further cooled to 5°Cwith an ice water bath. Then, using a syringe, trichlorosilane (0.13 mL, 1.3 mmol, 5.2 equivalents) was added dropwise to the solution at such a speed that the internal temperature never exceeded 10°C. Subsequently, the temperature was raised gradually over 3 hours to 80°C with an oil bath. The mixture was further stirred at 80°C for 10 minutes. The reaction solution was cooled to 5°C with an ice water bath. A dropping funnel was attached to the reaction flask, and an aqueous solution of sodium hydroxide (3.1 mL, 2.0 mol/L, 6.2 mmol, 25 equivalents) was charged therein and added dropwise to the reaction solution at such a speed that the internal temperature never exceeded 30°C. The reaction solution was heated with an oil bath, stirred at 60°C for 1 hour, and cooled to room temperature. Thereafter, the aqueous layer was separated. The organic layer was washed with water and 1 N hydrochloric acid, dried over sodium sulfate, and then concentrated under reduced pressure. The obtained residue was purified by silica gel column chromatography (eluent: toluene) . Thus, 0.056 g of the title compound (-)-(16) was obtained as a pale yellow solid. Isolated yield: 52.3%.

### Specific rotation: [α]_{D}²⁰=0.9° (c=0.43, chloroform)

The phosphorous compound of the present invention is useful as a ligand in a catalytic organic synthesis reaction. Moreover, the complex of the present invention is useful as a catalyst in an organic synthesis reaction. Next, the usefulness of the phosphorous compound of the present invention and the complex of the present invention will be described in detail based on Reference Example. Nevertheless, the present invention is not limited to these Reference Examples at all. Note that, in Reference Examples, the following apparatus was used for the measurement of physical properties.
Gas chromatography (GC): GC-2010 Plus model apparatus (manufactured by Shimadzu Corporation)
Column: InertCap 1 (manufactured by GL Sciences Inc.), initial
temperature: 100°C, rate of temperature rise: 10°C/minute,
final temperature: 250°C, measurement time: 30 minutes

### (Reference Example 1) Synthesis of 4-methylbiphenyl (Reaction Equation 22)

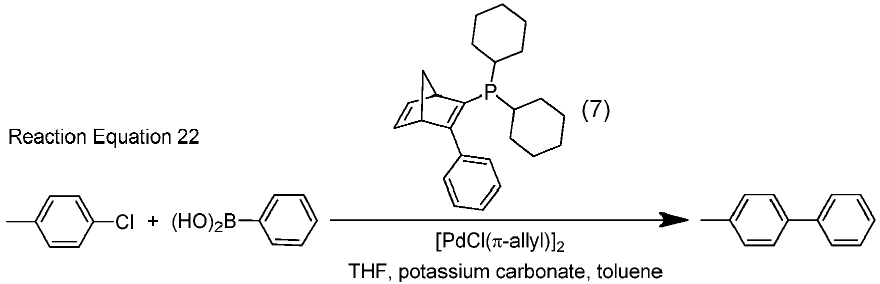

To a 50 mL 2-necked reaction flask, [PdCl (π-allyl)]₂ (5.8 mg, 0.0164 mmol, 0.025 mol%) and dicyclohexyl(3-phenylbicyclo[2.2.1]hepta-2,5-dien-2-yl)phos phine (7) (23.9 mg, 0.0656 mmol, 0.1 mol%) obtained in Example 2 were charged, and a three-way stopcock was attached. The inside of the flask was purged with nitrogen. Then, THF (6.5 mL) was added thereto under nitrogen stream, and mixed by shaking at room temperature for 1 minute. Thus, a THF solution (catalyst solution) of an equimolar (0.0328 mmol) mixture of dicyclohexyl(3-phenylbicyclo[2.2.1]hepta-2,5-dien-2-yl)phos phine (7) and dicyclohexyl(3-phenylbicyclo[2.2.1]hepta-2,5-dien-2-yl)phos phine (n-allyl)palladium chloride (26) was obtained in the form of a pale yellow liquid. On the other hand, A 200 mL 4-necked reaction flask equipped with a three-way stopcock and a Teflon^{®} coated magnetic stirring bar, and a condenser was evacuated and the inside of the flask was purged with nitrogen. To this flask, 4-chlorotoluene (7.8 mL, 65.6 mmol, 1.0 equivalents), toluene (65 mL), phenylboronic acid (10.0 g, 82.0 mmol, 1.25 equivalents), potassium carbonate (13.6 g, 98.4 mmol, 1.5 equivalents), and the catalyst solution were successively charged. The flask was heated with an oil bath, and the mixture was stirred at 80°C for 1 hour. A portion of the reaction solution was sampled, diluted with toluene, and further washed with water. The resulting solution was analyzed by GC. As a result, the target 4-methylbiphenyl was obtained. GC conversion: 40.1%. GC retention time: 2.8 minutes for 4-chlorotoluene, 8.4 minutes for 4-methylbiphenyl.

### (Reference Example 2)

The same procedures as in Reference Example 1 were conducted, except that the phosphorous compound (7) of the present invention in Reference Example 1 was changed to dicyclohexyl(3-(2-methoxyphenyl)bicyclo[2.2.1]hepta-2,5-die n-2-yl)phosphine (9) (25.9 mg, 0.0656 mmol, 0.1 mol%) obtained in Example 4. Thus, the target 4-methylbiphenyl was obtained. GC conversion: 69.9%.

### (Reference Example 3)

The same procedures as in Reference Example 1 were conducted, except that the phosphorous compound (7) of the present invention in Reference Example 1 was changed to dicyclohexyl(3-phenylbicyclo[2.2.1]hept-2-en-2-yl)phosphine (12) (24.0 mg, 0.0656 mmol, 0.1 mol%) obtained in Example 6. Thus, the target 4-methylbiphenyl was obtained. GC conversion: 49.4%.

### (Reference Example 4)

The same procedures as in Reference Example 1 were conducted, except that the phosphorous compound (7) of the present invention in Reference Example 1 was changed to dicyclohexyl(3-(2-methoxyphenyl)bicyclo[2.2.1]hept-2-en-2-y 1)phosphine (14) (26.0 mg, 0.0656 mmol, 1.0 mol%) obtained in Example 8. Thus, the target 4-methylbiphenyl was obtained. GC conversion: 63.2%.

### (Reference Example 5)

The same procedures as in Reference Example 1 were conducted, except that the phosphorous compound (7) of the present invention in Reference Example 1 was changed to dicyclohexyl(3-(2,6-dimethoxyphenyl)bicyclo[2.2.1]hept-2-en -2-yl)phosphine (16) (28.0 mg, 0.0656 mmol, 1.0 mol%) obtained in Example 10. Thus, the target 4-methylbiphenyl was obtained. GC conversion: 98.2%.

The phosphorous compound of the present invention can be polymerized. A complex containing a polymer of the phosphorous compound of the present invention is useful as a catalyst in an organic synthesis reaction. Next, the technique of polymerizing the phosphorous compound of the present invention and the usefulness of the polymer will be described in detail based on Reference Examples. Nevertheless, the present invention is not limited to these Reference Examples at all. Note that, in Reference Examples, the following apparatus was used for the measurement of physical properties.
Gas chromatography (GC): GC-2010 Plus model apparatus (manufactured by Shimadzu Corporation)
Column: InertCap 1 (manufactured by GL Sciences Inc.), initial
temperature: 100°C, rate of temperature rise: 10°C/minute,
final temperature: 250°C, measurement time: 30 minutes.

### (Reference Example 6) Synthesis of copolymer (35) containing bicyclo[2.2.1]hepta-2,5-dien-2-yldicyclohexylphosphine (29) and 1,4-di-(exo-bicyclo[2.2.1]hept-5-en-2-yl)benzene (33) (Reaction Equation 23)

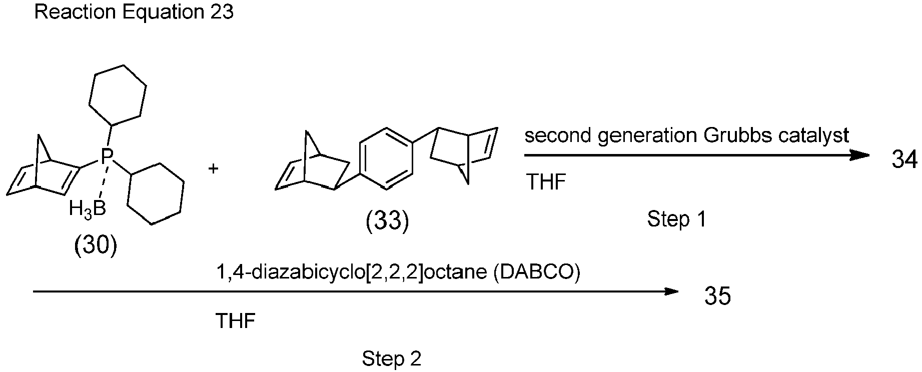

### Step 1: Synthesis of copolymer (34) containing bicyclo[2.2.1]hepta-2,5-dien-2-yldicyclohexylphosphine-mono meric borane complex (30) and 1,4-di-(exo-bicyclo[2.2.1]hept-5-en-2-yl)benzene (33)

To a 20 mL Schlenk tube equipped with a Teflon^{®} coated magnetic stirring bar, bicyclo[2.2.1]hepta-2,5-dien-2-yldicyclohexylphosphine-mono meric borane complex (30) (0.030 g, 0.1 mmol), 1,4-di-(exo-bicyclo[2.2.1]hept-5-en-2-yl)benzene (33) (0.24 g, 0.9 mmol), and THF (5 mL) were charged. After the solution was degassed under reduced pressure, the inside of the Schlenk tube was purged with nitrogen. A second generation Grubbs catalyst (8.5 mg, 0.01 mmol) was added to the solution, and stirred at 30°C for 30 minutes. Then, 2 mL of THF was added thereto. Subsequently, the mixture was stirred for 4 hours and 30 minutes. After the solid thus formed was filtered, the resultant was washed with THF (10 mL) and dried under reduced pressure. Thus, 0.26 g of the title substance (34) was obtained as a pale yellow solid.

### Step 2: Synthesis of copolymer (35) containing bicyclo[2.2.1]hepta-2,5-dien-2-yldicyclohexylphosphine (29) and 1,4-di-(exo-bicyclo[2.2.1]hept-5-en-2-yl)benzene (33)

To a 30 mL 2-necked reaction flask equipped with a three-way stopcock, a Teflon^{®} coated magnetic stirring bar, and a condenser, THF (10 mL) and the copolymer (34) (0.26 g) containing bicyclo[2.2.1]hepta-2,5-dien-2-yldicyclohexylphosphine-mono meric borane complex (30) and 1,4-di-(exo-bicyclo[2.2.1]hept-5-en-2-yl)benzene (33) were charged. After the suspension was degassed under reduced pressure, the inside of the flask was purged with nitrogen. To this flask, 1,4-diazabicyclo[2.2.2]octane (DABCO) (0.056 g, 0.5 mmol) was added, and heated under reflux for 5 hours. The reaction solution was cooled to room temperature, and the insoluble solid was filtered. Then, the solid was washed with THF (10 mL). Thus, 0.23 g of the title substance (35) was obtained as a white solid.

### (Reference Example 7) Synthesis of copolymer (36) containing dicyclohexyl(3-phenylbicyclo[2.2.1]hepta-2,5-dien-2-yl)phos phine (7) and 1,4-di-(exo-bicyclo[2.2.1]hept-5-en-2-yl)benzene (33) (Reaction Equation 24)

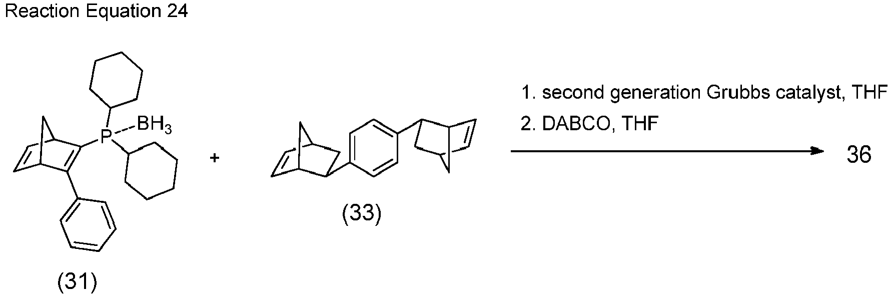

To a 20 mL Schlenk tube equipped with a Teflon^{®} coated magnetic stirring bar, dicyclohexyl(3-phenylbicyclo[2.2.1]hepta-2,5-dien-2-yl)phos phine-monomeric borane complex (31) (0.019 g, 0.05 mmol), 1,4-di-(exo-bicyclo[2.2.1]hept-5-en-2-yl)benzene (33) (0.12 g, 0.45 mmol), and THF (1.5 mL) were charged. After the solution was degassed under reduced pressure, the inside of the Schlenk tube was purged with nitrogen. A second generation Grubbs catalyst (4.2 mg, 0.005 mmol) was added to the solution, and stirred at 30°C for 30 minutes. Then, 1.5 mL of THF was added thereto. Subsequently, the mixture was stirred for 4 hours and 30 minutes. After the solid thus formed was filtered, the resultant was washed with THF (10 mL). To a 30 mL 2-necked reaction flask equipped with a three-way stopcock, a Teflon^{®} coated magnetic stirring bar, and a condenser, the obtained solid and THF (5 mL) were charged. After the suspension was degassed under reduced pressure, the inside of the flask was purged with nitrogen. To this flask, DABCO (0.11 g, 1.0 mmol) was added, and heated under reflux for 1 hour. The reaction mixture was cooled to room temperature, and the insoluble solid was filtered. Then, the solid was washed with THF (10 mL). Thus, 0.12 g of the title substance (36) was obtained as a white solid.

### (Reference Example 8) Synthesis of 4-methylbiphenyl (Reaction Equation 25)

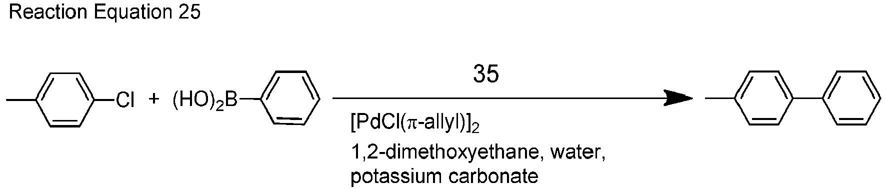

To 30 mL 2-necked reaction flask equipped with a three-way stopcock, a Teflon^{®} coated magnetic stirring bar, and a condenser, the copolymer (35) (0.10 g) containing bicyclo[2.2.1]hepta-2,5-dien-2-yldicyclohexylphosphine and 1,4-di-(exo-bicyclo[2.2.1]hept-5-en-2-yl)benzene (33) obtained in Reference Example 6, [PdCl(π-allyl)]₂ (3.5 mg, 0.01 mmol, 0.5 mol%), and 1, 2-dimethoxyethane (8.0 mL) were charged. After the suspension was degassed under reduced pressure, the inside of the flask was purged with nitrogen. To this flask, 4-chlorotoluene (0.24 mL, 2.0 mmol, 1.0 equivalents), phenylboronic acid (0.30 g, 2.5 mmol, 1.25 equivalents), water (8.0 mL), and potassium carbonate (0.42 g, 3.0 mmol, 1.5 equivalents) were successively added. The flask was heated with an oil bath, and the mixture was stirred under reflux for 7 hours. A portion of the reaction solution was sampled, diluted with toluene, and further washed with water. The resulting solution was analyzed by GC. As a result, the target 4-methylbiphenyl was obtained. GC conversion: 93.6%. GC retention time: 2.8 minutes for 4-chlorotoluene, 8.4 minutes for 4-methylbiphenyl.

### (Reference Example 9)

The same procedures as in Reference Example 1 were conducted, except that the polymer of the phosphorous compound in Reference Example 1 was changed to the copolymer (36) (0.12 g) containing dicyclohexyl(3-phenylbicyclo[2.2.1]hepta-2,5-dien-2-yl)phos phine (7) and 1,4-di-(exo-bicyclo[2.2.1]hept-5-en-2-yl)benzene (33) obtained in Reference Example 7. Thus, the target 4-methylbiphenyl was obtained. GC conversion: 91.8%.

### Industrial Applicability

The phosphorous compound of the present invention is useful not only as a ligand in an organic synthesis reaction using a complex catalyst, but also as a synthetic intermediate thereof. Moreover, the complex of the present invention is useful as a catalyst in an organic synthesis reaction. For example, a complex containing a transition metal palladium and the phosphorous compound of the present invention is quite useful as a catalyst in a bond forming reaction, and aromatic compounds and the like can be produced efficiently by such reactions.

## Claims

1. A phosphorous compound represented by general formula (1): 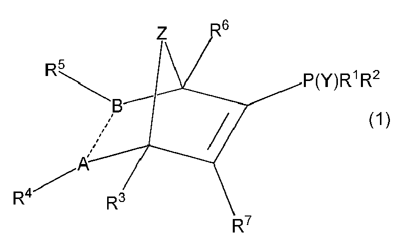 wherein R¹ and R² each independently represent a hydrogen atom, an alkyl group, an alkenyl group optionally having substitutent(s), an aryl group optionally having substitutent(s), a heteroaryl group optionally having substitutent(s), or an aralkyl group optionally having substitutent(s), or R¹ and R² may be bonded to each other to form a ring containing a phosphorus atom to which R¹ and R² are bonded; an A-B bond represents a carbon-carbon single bond or a carbon-carbon double bond; in the case where the A-B bond is a carbon-carbon single bond, both A and B represent a methanetriyl group; in the case where the A-B bond is a carbon-carbon double bond, both A and B represent a carbon atom; R⁷ represents a hydrogen atom, an aryl group optionally having substitutent(s), or a heteroaryl group optionally having substitutent(s); Z represents a divalent group optionally having substitutent(s); R³, R⁴, R⁵, and R⁶ each independently represent a hydrogen atom, an alkyl group optionally having substitutent(s), an alkenyl group optionally having substitutent(s), an aryl group optionally having substitutent(s), or an aralkyl group optionally having substitutent (s); and Y represents an oxo group, a thioxo group, a monomeric borane, or a lone electron pair.

2. The phosphorous compound according to claim 1, wherein Z is selected from the group consisting of an oxy group, a thio group, imino groups optionally having substitutent(s), methylene groups optionally having substitutent(s), and ethylene groups optionally having substitutent(s).

3. The phosphorous compound according to claim 1 or 2 which is an optically active substance.

4. The phosphorous compound according to any one of claims 1 to 3, wherein Y is a lone electron pair.

5. A transition metal complex comprising the phosphorous compound according to any one of claims 1 to 4 as a ligand.

6. The transition metal complex according to claim 5, comprising a transition metal selected from the group consisting of iron, cobalt, nickel, copper, ruthenium, rhodium, palladium, silver, osmium, iridium, platinum, and gold.
